(19) Europäisches Patentamt
European Patent Office
Office européen des brevets

(11) **EP 4 381 684 B1**

(12) **EUROPÄISCHE PATENTSCHRIFT**

(45) Veröffentlichungstag und Bekanntmachung des Hinweises auf die Patenterteilung:
**04.06.2025   Patentblatt 2025/23**

(21) Anmeldenummer: **22758422.4**

(22) Anmeldetag: **27.07.2022**

(51) Internationale Patentklassifikation (IPC):
*G06Q 20/06* (2012.01)     *G06Q 20/40* (2012.01)
*H04L 9/32* (2006.01)     *H04L 9/00* (2022.01)
*G06Q 20/10* (2012.01)     *G06Q 20/36* (2012.01)
*G06Q 20/38* (2012.01)

(52) Gemeinsame Patentklassifikation (CPC):
G06Q 20/3678; G06Q 20/0655; G06Q 20/105;
G06Q 20/38215; G06Q 20/3825; G06Q 20/4033;
H04L 9/008; H04L 9/3247; H04L 9/50;
H04L 2209/56

(86) Internationale Anmeldenummer:
**PCT/EP2022/025356**

(87) Internationale Veröffentlichungsnummer:
**WO 2023/011761 (09.02.2023 Gazette 2023/06)**

(54) **SICHERES ELEMENT, VERFAHREN ZUM REGISTRIEREN VON TOKEN UND TOKENREFERENZREGISTER**

SECURE ELEMENT, METHOD FOR REGISTERING TOKENS, AND TOKEN REFERENCE REGISTER

ÉLÉMENT DE SÉCURITÉ, PROCÉDÉ D'ENREGISTREMENT DE JETONS ET REGISTRE DE RÉFÉRENCE DE JETON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **04.08.2021   DE 102021004019**

(43) Veröffentlichungstag der Anmeldung:
**12.06.2024   Patentblatt 2024/24**

(73) Patentinhaber: **Giesecke+Devrient advance52 GmbH**
**81677 München (DE)**

(72) Erfinder:
• **ALBERT, Daniel**
**81737 München (DE)**
• **MANTRI, Deepen**
**81371 München (DE)**

(74) Vertreter: **Giesecke+Devrient IP**
**Prinzregentenstraße 161**
**81677 München (DE)**

(56) Entgegenhaltungen:
EP-A1- 3 040 922     DE-A1- 102019 002 732
US-A1- 2020 374 113

**Beschreibung**

Die Erfindung bezieht sich auf sichere Elemente als Transaktionseinheiten, ein Verfahren zum Registrieren von Token eines elektronischen Transaktionssystems, welches insbesondere die sicheren Elemente als Transaktionseinheiten sowie ein Tokenreferenz-Register umfasst. Zudem betrifft die Erfindung das Tokenreferenz-Register, in dem die Tokenreferenzen gespeichert werden, die eindeutig einem Token zugeordnet sind.

Mit Hilfe sicherer Elemente, wie Chipkarten, SIM-Module etc, als Transaktionseinheiten kann bekanntermaßen eine sichere direkte Übertragung zwischen den Transaktionseinheiten erreicht werden, wobei bewusste Mehrfachausgaben von Token, auch Double-Spending genannt, bereits ausgeschlossen sind.

Beispielsweise aus DE 10 2009 038 645 A1 und der DE 10 2009 034 436 A1 sind Systeme bzw. tragbare Datenträger als sichere Elemente zum Übertragen von geldwerten Beträgen in Form elektronischer Datensätze bekannt, bei denen ein Bezahlen mit Duplikaten des Datensatzes verhindert und ein hoher Grad an Manipulationssicherheit gegeben ist. Hier sind komplexe Strukturen und aufwendige Verschlüsselungs- und Signiervorgänge für die Transaktionen erforderlich. Diese haben sich als wenig praxistauglich herausgestellt.

Um die Sicherheit eines elektronischen Transaktionssystems zu gewährleisten sind unterschiedliche Ansätze bekannt, insbesondere auf dem Gebiet der Zentralbank-Digitalwährungen (CBDC) wird regelmäßig zwischen tokenbasierten und zugangsbasierten Systemen unterschieden.

Für zugangsbasierte Systemen, wie WO 2016/200885 A1, wurde bereits ein Verfahren zur Verschlüsselung eines mittels Blockchain-Ledger übertragenen Betrags beschrieben, wobei die Verifizierbarkeit der Transaktion des Betrags erhalten bleibt. Diese auf Blockchain-Topologien basierten Transaktionssysteme stellen einen hohen Schutz der Integrität bereit. Wenn Datensätze in einer Blockchain-Topologie den Besitzer wechseln, werden viele Informationen veröffentlicht. Dabei wird beispielsweise eine eindeutige Adresse einer Teilnehmereinheit verifizierbar in der Blockchain registriert. Somit sind Blockchain-Transaktionen nicht anonym. Zudem sind diese Transaktionen sehr rechenintensiv und damit energieaufwendig.

Es ist ebenfalls bereits bekannt, ein tokenbasiertes Transaktionssystem noch um ein Token-Register zu erweitern. Das sichere Element sendet eine Registrierungsanfrage für seinen Token an das Register. Das Register verifiziert die Registrierungsanfrage und speichert nur eine Tokenreferenz für den Token, kennt also vorzugsweise nicht den Token selbst. Die Erfindung bedient sich eines Verfahrens zum Registrieren von Token, die im Rahmen einer direkten Kommunikation zwischen Teilnehmereinheiten übertragen werden.

WO 2020/212337 A1 beschreibt ein Transaktionssystem, bei dem sogar Modifikationen am Token - beispielsweise durch Aufteilen des Tokens, offline, also direkt zwischen den sicheren Elementen des Transaktionssystems und ohne weitere Kontrollinstanz, gesichert möglich sind. Die Token können nach dem Erhalt in einem sicheren Element bzw. einer Teilnehmereinheit sofort weiter übertragen werden, ohne dass eine Registrierung einer Modifikation in einem Token-Register des Transaktionssystems erfolgen muss. Die sicheren Elemente sind bekanntermaßen jedoch ressourcenbeschränkt, insbesondere bezüglich Speicherplatz, Verarbeitungs- und/oder Übertragungsgeschwindigkeit begrenzt.

DE 102019002732 A1 beschreibt ebenfalls ein Token-Register und zeigt den Oberbegriff von Anspruch 1.

Den Teilnehmereinheiten, insbesondere sicheren Elementen, eines Transaktionssystems soll es ermöglicht sein, flexibel mit Token im Transaktionssystem bezahlen zu können. Eine Herausforderung ist es gerade für sichere Elemente, wenn eine Folge von Transaktionen mit einem Token oder einem Teil davon oder in Kombination mit anderen Token direkt zwischen Teilnehmereinheiten stattgefunden hat und erst danach eine Registrierung eines Tokens mit all den Modifikationen am Token erfolgen soll.

Die Erfindung bedient sich dabei eines Verfahrens zum Registrieren von direkt zwischen Teilnehmereinheiten übertragbaren Token. Insbesondere betrifft die Erfindung eine Bearbeitung von einer Gruppe, im Folgenden auch Stapel oder Folge, von Registrieranfragen.

Der Erfindung liegt die Aufgabe zu Grunde, ein Verfahren zum Registrieren von Token eines Transaktionssystems zu schaffen, in denen eine Folge von Transaktionen zwischen unterschiedlichen Teilnehmereinheiten des Transaktionssystems mit einem Token oder einem Teil davon oder in Kombination mit anderen Token sicher aber dennoch einfach ausgestaltet ist. Diese Folge von Transaktionen soll für Dritte anonym bleiben, d.h. ein empfangener Token soll geheim gegenüber allen nicht an der Transaktion beteiligten Teilnehmereinheiten sein. Token sollen nach dem Erhalt in einer Teilnehmereinheit sofort weiterverwendet werden können, um eine Transaktion auch ohne Verbindung zu einer entfernten Einheit, beispielsweise einem zentralen Register oder einem dezentralen Ledger, zu ermöglichen. Jede Teilnehmereinheit des Transaktionssystems soll einen erhaltenen Token überprüfen können, insbesondere sollen Mehrfach-Ausgabe-Versuche und Versuche, nicht vorhandene Tokenwerte zu übertragen, von einer Teilnehmereinheit oder allgemein im Transaktionssystem erkannt werden können. Die Anzahl von Transaktionen in Folge soll dabei unbeschränkt sein. Die Registrierung von einer Folge von Transaktionen soll einfach und sicher sein.

Die gestellte Aufgabe wird durch die in den unabhängigen Patentansprüchen beschriebenen Merkmalen gelöst. Weitere vorteilhafte Ausgestaltungen sind in den jeweils abhängigen Patentansprüchen beschrieben.

Die Aufgabe wird insbesondere durch ein Verfahren zum Registrieren von Token eines elektronischen Transaktionssystems gelöst, wobei jeder Token des Transaktionssystems zumindest einen Tokenwert und einen privaten Teil eines tokenindividuellen Schlüsselpaars als Token-Elemente aufweist.

Das Verfahren umfasst die Verfahrensschritte: Empfangen, in einem Tokenreferenz-Register des Transaktionssystems, einer Folge von Registrieranfragen, wobei jede Registrieranfrage der Folge eine erste Tokenreferenz und zumindest eine zweite Tokenreferenz aufweist und wobei mindestens eine Tokenreferenz einer ersten Registrieranfrage der Folge und eine Tokenreferenz einer zweiten Registrieranfrage der Folge gleich sind; Verifizieren, durch eine Verifiziereinheit des Tokenreferenz-Registers, ob zumindest eine der in der empfangenen Folge von Registrieranfragen enthaltene zumindest eine Tokenreferenz einem ersten Token des Transaktionssystems eindeutig zugeordnet werden kann, wobei dabei die Tokenreferenz darauf geprüft wird, ob sie im Tokenreferenz-Register gespeichert ist oder war, Speichern zumindest einer anderen als der geprüften Tokenreferenz aus der Folge von Registrieranfragen in der Speichereinheit des Tokenreferenz-Registers zum Registrieren des dieser Tokenreferenz eindeutig zugeordneten Tokens im Transaktionssystem, wenn im Verifizieren-Schritt festgestellt wird, dass die geprüfte Tokenreferenz der empfangenen Folge von Registeranfragen dem ersten Token des Transaktionssystems eindeutig zugeordnet werden kann und wenn die andere Tokenreferenz noch nicht im Tokenreferenz-Register gespeichert ist.

Nach dem Empfangen und Verifizieren und Speichern-Schritt kann eine nächste Registrieranfrage der Folge von Registrieranfragen bearbeitet werden.

Sicherheit von Transaktionen und den dazugehörigen Transaktionsdaten bedeutet sowohl Schutz der Vertraulichkeit der ausgetauschten Daten; als auch Schutz der Integrität der ausgetauschten Daten; als auch Schutz der Verfügbarkeit der ausgetauschten Daten.

Auf diese Weise kann eine Folge von Transaktionen in einer Direkttransaktionsschicht des Transaktionssystems direkt zwischen Teilnehmereinheiten mit einem Token und ggf.

Modifikationen verifiziert werden. Das Tokenreferenz-Register empfängt dann für jede der Transaktionen aus der Folge eine Registrieranfrage und prüft, inwieweit Tokenreferenzen zu Token des Transaktionssystems zugeordnet werden können, um die Token und damit auch die Transaktionen zu verifizieren.

Die Folge von Registrieranfragen betrifft Anfragen zum Registrieren von Token, die noch nicht in dem Transaktionssystem registriert sind. Dabei sind diese Token zwischen Teilnehmereinheiten direkt ausgetauscht worden und ggf. mehrfach modifiziert worden. Um die Registrierung (aller) dieser Token betreffend diese Registrieranfragen durchzuführen, müssen diese Registrieranfragen erfindungsgemäß nicht mehr einzeln erfolgen, sondern diese können als Folge von Registrieranfragen verarbeitet werden.

Eine Folge von Registeranfragen stellt eine Mehrzahl unterschiedlicher Registrieranfragen betreffend einen Token im Transaktionssystem dar. Die Mehrzahl kann auch als Block oder als Bündel bezeichnet werden. Der abzuspeichernde bzw. betreffende Token wurde dabei mehrfach (mindestens zweimal) modifiziert und keine dieser Modifikationen wurde im Tokenreferenz-Register erfasst, um den Token mit seinen Modifikationen zu registrieren.

Das Empfangen erfolgt bevorzugt an einer Schnittstelle des Tokenreferenz-Registers, bevorzugt einer Schnittstelle der Verifiziereinheit des Tokenreferenz-Registers.

Jede Registrieranfrage der Folge weist demnach zumindest zwei Tokenreferenzen auf. Bei einer Aufteilen (Split) oder Kombinieren (Merge) Modifikation eines Tokens sind drei Tokenreferenzen pro Registrieranfrage vorgesehen. Bei einer Umschalten (Switch) Modifikation eines Tokens sind zwei Tokenreferenzen pro Registrieranfrage vorgesehen.

Die Tokenreferenzen einer Folge von Registrieranfrage sind nicht unabhängig voneinander, zumindest zwei, bzw. mehrere Tokenreferenzen der Folge sind miteinander verknüpft bzw. bilden sich aufeinander ab. So ist mindestens eine Tokenreferenz einer ersten Registrieranfrage der Folge und eine Tokenreferenz einer zweiten Registrieranfrage der Folge gleich, d.h. diese die Tokenreferenz der ersten Registrieranfrage der Folge ist gleich der Tokenreferenz der zweiten Registrieranfrage der Folge.

Ein Transaktionssystem ist ein System in dem zumindest zwei, bevorzugt eine Vielzahl von Teilnehmereinheiten Token direkt untereinander austauschen (übertragen) können. Das Transaktionssystem ist beispielsweise ein Bezahltransaktionssystem zum Austausch von geldwerten Beträgen in Form von Bezahl-Token.

Bevorzugt war (Vergangenheit) oder ist (Gegenwart) jede Tokenreferenz aus der Folge von Registrieranfragen eindeutig einem Token im Transaktionssystem zugeordnet. Diese Zuordnung wird später noch detailliert erläutert werden. Diese Token wurden in einer Direkttransaktionsschicht des Transaktionssystems direkt zwischen Teilnehmereinheiten des Transaktionssystems übertragen oder wurden von einer oder mehrerer Teilnehmereinheiten modifiziert, ohne dass diese übertragenen Token und/oder modifizierten Token im Transaktionssystem registriert wurden. Insbesondere wurden die in der Folge von Registrieranfragen befindlichen (Eingangs-) Tokenreferenzen von übertragenen Token und/oder modifizierten Token nicht im Tokenreferenz-Register abgespeichert.

Eine Modifikation an einem Token ist insbesondere die Aufteilung (SPLIT) von Token (bzw. dessen Tokenwerts) oder das Verbinden (MERGE) von zumindest zwei Token (bzw. deren Tokenwerten) oder das Umschalten (SWITCH) des Tokens von einer Teilnehmereinheit auf eine andere Teilnehmereinheit. Diese Modifikationen werden weiter unten noch detailliert beschrieben.

Bevorzugt wird die gesamte Folge von Registrieranfragen in dem Tokenreferenz-Register empfangen, bevor der Verifizieren-Schritt ausgeführt wird, wobei jede (Eingangs-) Tokenreferenz aus jeder Registrieranfrage verifiziert werden muss. Es wird dabei jede Registrieranfrage aus der Folge im Tokenreferenz-Register empfangen und verifiziert und diese dann anhand des Verifizieren-Ergebnisses in der Speichereinheit gespeichert oder nicht gespeichert.

Das Speichern kann erfolgen, bevor eine weitere Registrieranfrage aus der Folge verifiziert wird. Das Speichern kann sofort nach dem Verifizieren erfolgen, beispielsweise, bevor eine weitere Registrieranfrage empfangen und/oder verifiziert wird.

Bevorzugt wird die gesamte Folge von Registrieranfragen von einer Teilnehmereinheit des Transaktionssystems an eine Registrieranfrage-Einheit des Transaktionssystems gesendet, bevor der Verifizieren-Schritt ausgeführt wird. Die Registrieranfrage-Einheit ist eine Instanz des Transaktionssystems die das Registrieren der gesamten Folge für eine Teilnehmereinheit verwaltet. Die Teilnehmereinheit delegiert damit das Registrieren der gesamten Folge an die Registrieranfrage-Einheit. Damit wird die Anzahl von (einzelnen) Registrieranfragen von der Teilnehmereinheit an das Tokenreferenz-Register und auch der Verwaltungsaufwand pro Teilnehmereinheit verringert.

Das Tokenreferenz-Register empfängt und verifiziert sequentiell jede Registrieranfrage aus der Folge von Registrieranfragen von der Registrieranfrage-Einheit, bevor die nächste Registrieranfrage aus der Folge von Registrieranfragen von der Registrieranfrage-Einheit empfangen und verifiziert wird. Damit werden alle Registrieranfragen nacheinander abgearbeitet und nach dem Verifizieren entsprechend dem Verifizieren-Ergebnis in der Speichereinheit abgespeichert.

In einer weniger bevorzugten Ausgestaltung empfängt und verifiziert das Tokenreferenz-Register sequenziell jede Registrieranfrage aus der Folge von Registrieranfragen von der Teilnehmereinheit, bevor die nächste Registrieranfrage aus der Folge von Registrieranfragen von der Teilnehmereinheit empfangen und verifiziert wird. Damit werden alle Registrieranfragen nacheinander abgearbeitet und nach dem Verifizieren entsprechend dem Verifizieren-Ergebnis in der Speichereinheit abgespeichert.

Das Tokenreferenz-Register kann dabei Einzelregistrieranfragen (also einzelne Registrieranfragen, die einen Token und/oder dessen Modifikation betreffen) oder Registrieranfragestapel (also eine Mehrzahl von einzelnen Registrieranfragen, die verschiedene Token und/oder deren eine Modifikation betreffen) oder auch Folgen von Registrieranfragen (also eine Mehrzahl von einzelnen Registrieranfragen, die den gleichen Token und/oder dessen Modifikation betreffen) verifizieren (speziell dessen Verifizier-Einheit,) und speichern (speziell dessen Speichereinheit).

Einzelregistrieranfragen oder Teile eines Registrieranfragestapels können auf verschiedene Verifiziereinheiten eines Tokenreferenz-Registers verteilt werden und diese können damit parallel von verschiedenen Verifiziereinheiten des Tokenreferenz-Registers verarbeitet werden. Damit kann eine große Anzahl von Registrieranfragen intern im Tokenreferenz-Register auf verschiedene Verifiziereinheiten aufgeteilt werden ("Load balancing").

Jede Folge von Registrieranfragen kann und sollte sequenziell verarbeitet werden. In einer Ausgestaltung sendet die Teilnehmereinheit und/oder die Registrieranfrage-Einheit jede Registrieranfrage aus der Folge von Registrieranfragen sequenziell als eine Einzelregistrieranfrage an das Tokenreferenz-Register, ohne dass das Tokenreferenz-Register, speziell die Verifizier-Einheit in Kenntnis darüber ist, dass diese Einzelregistrieranfrage ein Teil einer Folge von Registrieranfragen ist. Die Folge von Registrieranfragen wird in der Regel von einer Teilnehmereinheit bereitgestellt.

Jede Registrieranfrage der Folge umfasst mindestens eine Tokenreferenz als Ausgangs-Tokenreferenz sowie mindestens eine Eingangs-Tokenreferenz.

Bei einer SWITCH-Modifikation umfasst die Registrieranfrage genau eine Tokenreferenz als Ausgangs-Tokenreferenz sowie genau eine Eingangs-Tokenreferenz. Bei einer SPLIT-Modifikation umfasst die Registrieranfrage genau eine (oder mehrere) Eingangs-Tokenreferenz(en) sowie mindestens zwei Tokenreferenzen als Ausgangs-Tokenreferenzen. Bei einer MERGE-Modifikation umfasst die Registrieranfrage mindestens zwei Tokenreferenzen als Eingangs-Tokenreferenzen sowie genau eine (oder mehrere) Ausgangs-Tokenreferenz(en).

Die Registrieranfragen der Folge sind über ihre Tokenreferenzen miteinander verknüpft, insbesondere bildet jeweils eine Ausgangs-Tokenreferenz einer Registrierungsanfrage der Folge eine Eingangs-Tokenreferenz (einer) der nächsten Registrierungsanfrage(n) der Folge.

In einer bevorzugten Ausgestaltung umfasst das Verfahren die weiteren Schritte: Erstellen, von der Verifiziereinheit des Tokenreferenz-Registers, einer Registrierantwort, wobei die Registrierantwort ein Ergebnis des Verifizieren-Schritts anzeigt und Senden der Registrierantwort an eine die Registrieranfrage aus der Folge von Registrieranfragen versendende Teilnehmereinheit oder Registrieranfrage-Einheit des Transaktionssystems, wobei bevorzugt die Teilnehmereinheit den Token der zumindest einen Tokenreferenz der Folge der Registrieranfragen aufweist.

Bevorzugt betrifft die Registrierantwort an die Teilnehmereinheit alle Registrieranfragen aus der Folge. Wird die Folge in Rahmen von einzelnen Registrieranfragen an das Tokenreferenz-Register gesendet, betreffen die Registrierantwort nur die jeweilige einzelne Registrieranfrage.

Eine Registrierantwort umfasst eine Information, bevorzugt eine Registrierstatusinformation (Status, Statuscode) betreffend das Ergebnis aus dem Verifizier-Schritt.

Wird beispielsweise im Verifizier-Schritt festgestellt, dass die zumindest eine Tokenreferenz der empfangenen Registeranfrage einem Token des Transaktionssystems eindeutig zugeordnet werden kann und in der Folge, der Token durch Speichern der Tokenreferenz im Transaktionssystem registriert wird, so umfasst diese Information einen positiven Registrierstatus.

Ein positiver Registrierstatus einer Registrierantwort kann für die gesamte Folge von Registrieranfragen gelten, beispielsweise dann, wenn die zumindest eine Tokenreferenz der chronologisch letzten Registrieranfrage aus der Folge von Registrieranfragen einem Token des Transaktionssystems eindeutig zugeordnet werden kann. Bei derartig erfolgreicher Zuordnung eines Tokens zu der chronologisch letzten Tokenreferenz innerhalb einer Folge von Registrieranfragen wird davon ausgegangen, dass auch sämtliche andere Tokenreferenzen der Folge von Registrieranfragen eindeutig einem Token zugeordnet werden können oder in der Vergangenheit konnten. In der Teilnehmereinheit wird dann nur die Registrierantwort einer (der letzten) Registrieranfragen empfangen.

Wird beispielsweise im Verifizier-Schritt festgestellt, dass die zumindest eine Tokenreferenz der empfangenen Registeranfrage keinem Token des Transaktionssystems eindeutig zugeordnet werden kann und in der Folge, der Token nicht registriert wird, so umfasst diese Information einen negativen Registrierstatus.

Die Registrierantwort umfasst neben der Registrierstatusinformation bevorzugt auch die Registrieranfrage auf die sich die Registrierantwort bezieht. Damit kann in der Teilnehmereinheit geprüft werden, ob die Registrierantwort gültig ist oder ob ein Manipulationsversuch vorliegt.

Bei einem positiven Registrierstatus kann die in der Registrierantwort enthaltene Registrieranfrage die zuletzt (chronologisch letzte) empfangene Registrieranfrage aus der Folge von Registrieranfragen betreffen.

Bei einem negativen Registrierstatus kann die in der Registrierantwort enthaltene Registrieranfrage die erste (chronologisch erste) Registrieranfrage aus der Folge von Registrieranfragen betreffen, die zeitlich auf eine Registrieranfrage der Folge folgt, deren Tokenreferenz einem Token des Transaktionssystems eindeutig zugeordnet werden konnte. Die enthaltene Registrieranfrage ist damit die chronologisch erste Registrieranfrage, bei der keine eindeutige Zuordnung eines Tokens im Verifizieren-Schritt verifiziert werden konnte.

Die Registrierantwort ist bevorzugt mit einem privaten Teil eines Schlüsselpaars des Tokenreferenz-Registers, bevorzugt der Verifizier-Einheit (ggf. einer von einer Vielzahl von Verifizier-Einheiten), signiert. Diese Signatur wird von der Teilnehmereinheit beim Empfang der Registrierantwort mit dem öffentlichen Teil des Schlüsselpaars des Tokenreferenz-Registers überprüft. Dies erhöht die Sicherheit, denn Registrierantworten, die von unberechtigten Dritten - beispielsweise im Rahmen von Man-in-the-Middle-Attacken - erzeugt werden, werden von einer Teilnehmereinheit aufgrund einer fehlenden oder ungültigen Signatur erkannt. Derartige Registrierantworten können dann von der Teilnehmereinheit ignoriert werden.

In einer Ausgestaltung wird nur für die (chronologisch) letzte verifizierte Registrieranfrage (Tokenreferenz kann zu einem Token zugeordnet werden) aus der Folge von Registrieranfragen eine Registrierantwort mit einer Tokenreferenz-Signatur erstellt und diese signierte Registrierantwort an die Teilnehmereinheit oder die Registrieranfrage-Einheit gesendet.

In einer Ausgestaltung wird für alle erfolgreich verifizierten Registrieranfrage (jede Tokenreferenz kann dann zu einem Token eindeutig zugeordnet werden) aus der Folge von Registrieranfragen eine Registrierantwort mit einer Tokenreferenz-Signatur erstellt und diese signierte Registrierantwort an die Teilnehmereinheit oder die Registrieranfrage-Einheit gesendet.

In einer bevorzugten Ausgestaltung wird die Folge von Registrieranfragen in einer Archivierungseinheit gespeichert. Damit können alle Registrieranfragen im Tokenreferenz-Register archiviert werden. Dies ermöglicht eine Überprüfung von Tokenreferenzen auch zu einem viel späteren Zeitpunkt.

Bevorzugt ist die Archivierungseinheit eine Einheit des Tokenreferenz-Registers.

In einer Ausgestaltung umfasst jede Registrieranfrage auch eine Information über einen Kommandotyp. Dieser Kommandotyp informiert das Tokenreferenz-Register darüber, welche Art von Modifikation am Token vorgenommen wurde und zeigt damit dem Tokenreferenz-Register an, welche Informationen in der Registrierungsanfrage nachfolgend enthalten sind.

In einer Ausgestaltung werden in der Archivierungseinheit die Registrieranfragen vollständig abgespeichert. Damit werden die Registrierungsanfragen und die darin enthaltenen Tokenreferenzen und auch ein Kommandotyp abgespeichert. Dies ermöglicht im Fehlerfall eine Prüfung aller Tokenreferenzen, um Token zu einem späteren dennoch registrieren zu können.

In einer Ausgestaltung wird eine Registrieranfrage aus der Archivierungseinheit gelöscht, wenn eine vordefinierte Zeitspanne seit der Archivierung der Registrieranfrage in der Archivierungseinheit verstrichen ist. Diese vordefinierte Zeitspanne ist beispielsweise 1 Jahr oder eine Mehrzahl von Monaten, beispielsweise 12 Monate, 9 Monate oder 6 Monate. Nach dieser Zeitspanne sinkt die Wahrscheinlichkeit, dass diese Registrieranfrage nochmals geprüft werden muss. Damit dient die Archivierungseinheit zur Prüfung alter Registrieranfragen, wobei nach Ablauf der Zeitspanne ein automatischer Löschvorgang dafür sorgt, dass die Datenmenge in der Archivierungseinheit nicht unnötig groß ist.

In einer bevorzugten Ausgestaltung wird jede Registrieranfrage in einer Archivierungseinheit des Tokenreferenz-Registers, bevorzugt in einem ersten Teil der Archivierungseinheit, gespeichert, wenn im Verifizieren-Schritt festgestellt wird, dass die zumindest eine Tokenreferenz einer der Registrieranfragen der Folge von Registrieranfragen keinem Token des Transaktionssystems eindeutig zugeordnet werden kann. In der Archivierungseinheit (beispielsweise in dem ersten Teil davon) werden demnach Registrierungsanfragen gespeichert, bei denen im Verifizieren-Schritt die Tokenreferenz keinem Token eindeutig zugeordnet werden konnte. Dies ist beispielsweise der Fall, wenn der Token der Tokenreferenz das Ergebnis einer Aufteilen-Modifikation ist und dem Tokenreferenz-Register nur eine Tokenreferenz der zumindest zwei Tokenreferenzen der aufgeteilten Token bekannt ist. Dies ist beispielsweise auch der Fall, wenn kein Token zu der Tokenreferenz existiert, also Tokenwerte illegal generiert worden sind.

In einer bevorzugten Ausgestaltung wird jede Registrieranfrage in einer Archivierungseinheit des Tokenreferenz-Registers, bevorzugt in einem ersten Teil der Archivierungseinheit, gespeichert, wenn im Verifizieren-Schritt festgestellt wird, dass die zumindest eine Tokenreferenz einer der Registrieranfragen der Folge von Registrieranfragen bereits im Tokenreferenz-Register gespeichert ist. In der Archivierungseinheit (beispielsweise in einem ersten Teil davon) werden demnach Registrierungsanfragen gespeichert, die bereits im Tokenreferenz-Register gespeichert sind. Dies ist beispielsweise der Fall, wenn in unerlaubter Weise versucht wurde, einen Token mehrfach auszugeben.

Bevorzugt wird eine Folge von Registrieranfragen mit Tokenreferenzen in einem zweiten Teil der Archivierungseinheit, abgespeichert wird, wenn alle Tokenreferenzen der Folge von Registrieranfragen jeweils einem Token des Transaktionssystems eindeutig zugeordnet werden können.

Mit der Archivierungseinheit ist das Tokenreferenz-Register in vorteilhafter Weise in der Lage, eine abgebrochene Verarbeitung oder nur teils Verarbeitung einer Folge von Registrieranfragen wieder aufnehmen zu können.

Dieser Abbruch oder diese nur teilweise Verarbeitung (Abarbeitung) kann aufgrund Netzwerk- oder Übertragungsfehlern erfolgen. Dabei kommt es während der Registrierung der Folge der Registrieranfragen, also nach einem Registrieren einer der Registrieranfragen der Folge durch Speichern der Tokenreferenz in der Speichereinheit aber vor dem Registrieren der letzten Registrieranfrage der Folge zu Problemen bei der Datenübertragung der weiteren Registrieranfragen aus der Folge. Die Speichereinheit wurde dabei teilweise bereits aktualisiert, die Folge aber nicht vollständig abgearbeitet. Um diesen Fehlerfall abzubilden und auflösen zu können ist die Archivierungseinheit vorgesehen, in der der bereits abgearbeitete Teil der Folge archiviert ist.

Dieser Abbruch oder diese nur teilweise Verarbeitung (Abarbeitung) kann aufgrund eines Fehlverhaltens einer Teilnehmereinheit erfolgen. Beispielsweise hat eine böswillige Teilnehmereinheit absichtlich entweder die Reihenfolge der Registrieranfragen oder die Syntax der Registrieranfragen geändert, woraufhin das Tokenreferenz-Register eine Registrieranfrage nicht verifizieren kann (Betrugsversuch). Beispielsweise wurde aufgrund eines fehlerhaften Verhaltens der Teilnehmereinheit oder aufgrund von Datenübertragungsfehlern oder aus anderen Gründen ungültige Registrieranfragen in der Folge von Registrieranfragen empfangen. Die Speichereinheit wurde dabei teilweise bereits aktualisiert, die Folge aber nicht vollständig abgearbeitet. Um diesen Fehlerfall abzubilden und auflösen zu können ist die Archivierungseinheit vorgesehen, in der der bereits abgearbeitete Teil der Folge archiviert ist.

Dieser Abbruch oder diese nur teilweise Verarbeitung (Abarbeitung) kann aufgrund einer nicht-zuordbaren Tokenreferenz erfolgen. Beispielsweise gab es nie einen zuordbaren Token (Betrugsversuch) oder der zuordbare Token wurde bereits wieder modifiziert und zu dieser Modifikation (Aufteilen, Verbinden, Umschalten) existiert eine Tokenreferenz im Tokenreferenz-Register oder der zuordbare Token wurde bereits ausgegeben (illegaler Mehrfachausgabeversuch) oder der zuordbare Token wurde gelöscht (Tokenwert wurde eingelöst). Um diesen Fehlerfall abzubilden und auflösen zu können, ist die Archivierungseinheit vorgesehen, in der der bereits abgearbeitete Teil der Folge archiviert ist.

Die Speichereinheit des Tokenreferenz-Registers ist in allen diesen Abbruch oder nur teilweise Verarbeitungen (Abarbeitungen) einer Folge von Registrieranfragen in unvollständiger Weise aktualisiert worden und zum vollständigen Abarbeiten der Folge der Registrieranfrage bei Wiederholung des Registrierens der Folge wird nun die Archivierungseinheit vorgesehen, um etwaige Manipulationsversuche (bspw. das Verändern der Folge durch die Teilnehmereinheit) zu erkennen.

Die Unterteilung in einen ersten Teil (= passiver Teil) und einen zweiten Teil (= aktiver Teil) in der Archivierungseinheit ermöglicht ein einfacheres Wiederaufnehmen der Abarbeitung einer unvollständig verarbeiteten Folge, denn im zweiten Teil können Registrieranfragen von unvollständig verarbeiteten Folgen verarbeitet werden.

Das Tokenreferenz-Register kann die erneut oder wiederholt empfangene Registrieranfrage der Folge von Registrieranfragen unter Mitwirken und Anrufen der Archivierungseinheit nun leicht erkennen und die Folge abschließend vollständig abarbeiten.

Wird die Folge von Registrieranfragen vollständig bearbeitet, kann diese aus dem ersten Teil in den zweiten Teil der Archivierungseinheit umgespeichert werden.

Der erste Teil der Archivierungseinheit kann auch vom Tokenreferenz-Register angerufen werden, wenn eine Tokenreferenzen nicht im Tokenreferenz-Register gespeichert ist, um abzusichern, dass diese Tokenreferenz nicht Teil einer unvollständig bearbeiteten Folge ist.

Der erste Teil der Archivierungseinheit kann auch von einer Instanz des Transaktionssystems angerufen werden, wenn ein Token gelöscht oder eingelöst werden soll. So kann diese Instanz mittels einer zuordenbaren Tokenreferenz sicherstellen, ob der Token Teil einer unvollständig abgearbeiteten Folge von Registrieranfragen war.

In einer bevorzugten Ausgestaltung werden die Tokenreferenzen der Folge von Registrieranfragen chronologisch rückwärts verifiziert. Beispielsweise wird für die letzte erfolgreich verifizierte Registrieranfrage oder alle erfolgreich verifizierten Registrieranfragen der Folge von Registrieranfragen eine Registrierantwort erstellt. Diese kann dann zusätzlich mit dem privaten Teil des Schlüsselpaars des Tokenreferenz-Registers signiert werden. Die Registrierantwort wird an die Teilnehmereinheit oder die Registrieranfrage-Einheit als Bestätigung der Registrierung gesendet.

Wenn die letzte Registrieranfrage der Folge erfolgreich verifiziert werden konnte und dies der Teilnehmereinheit oder der Registrieranfrage-Einheit als Bestätigung (Registrierantwort) gesendet wurde, können in der Teilnehmereinheiten alle Registrieranfragen der Folge gelöscht werden.

Ein Token ist ein zwischen Teilnehmereinheiten direkt austauschbarer Datensatz eines Transaktionssystems. Mit Kenntnis des Tokens ist die empfangende Teilnehmereinheit im Besitz des Tokenwerts, den der Token repräsentiert. Mit dem Austauschen wechselt der Token demnach automatisch den Besitzer. Ein Token - ein Datensatz, der unabhängig von einer Transaktionstopologie, wie Blockchain-Topologien "Bitcoin", "Ethereum" oder "Neo", übertragbar ist - kann direkt zwischen Teilnehmereinheiten ohne dazwischengeschaltete Einheiten übertragen werden.

In einer Ausgestaltung ist der Token ein elektronischer Münzdatensatz oder Bezahl-Token, um geldwerte Beträge zwischen Teilnehmereinheiten zu tauschen. Umgangssprachlich wird ein derartiger Bezahl-Token auch als "digitale Münze" oder "elektronische Münze", englisch "digital/electronic coin" bezeichnet und repräsentiert Bargeld in elektronischer Form.

Jeder Token im Transaktionssystem ist ein Datensatz umfassend zumindest zwei Tokenelemente.

Ein erstes Tokenelement jedes Tokens des Transaktionssystems ist ein Tokenwert, bspw. ein Vermögenswert, ein Vermögensgegenstand, ein Wirtschaftsgut und/oder ein geldwerter Betrag.

Ein zweites Tokenelement jedes Tokens des Transaktionssystems ist ein privater Teil eines tokenindividuellen Schlüsselpaars. Dieser private Teil ist ein Geheimnis im Transaktionssystem und wird nicht veröffentlicht und darf nicht mehrfach verwendet werden. Die Erzeugung des privaten Teils darf nicht vorhersagbar sein. Dieser private Teil kann eine Zufallszahl sein. Bevorzugt ist die Zufallszahl das Ergebnis eines echten Zufallsgenerators.

Aus dem Tokenwert (erstes Tokenelement) und dem privaten Teil wird der Token gebildet. Dieses Bilden ist bevorzugt das Verketten (Konkatenation) dieser beiden Tokenelemente. Jede andere Art der Verknüpfung dieser beiden Tokenelemente ist erfindungsgemäß nicht ausgeschlossen und umfasst beispielsweise das Hintereinander-Anfügen, das Einbringen in eine TLV-Datenstruktur und/oder das logische Verknüpfen.

Der Token unterscheidet sich von einem Datensatz zum klassischen Datenaustausch oder Datentransfer, da beispielsweise ein klassischer Datenaustausch auf Basis eines Frage-Antwort-Prinzips bzw. auf einer Interkommunikation zwischen den Partnern des Datenaustauschs stattfindet. Ein Token ist dementgegen einmalig und eindeutig im Transaktionssystem. Der Token steht im Kontext eines Sicherheitskonzepts, welches beispielsweise Signaturen oder kryptografische Verschlüsselungen umfasst. In einem Token sind alle Datenelemente enthalten, die für eine empfangende Teilnehmereinheit bezüglich Verifikation, Authentisierung und Weitergeben des Tokens an eine andere Teilnehmereinheit benötigt werden. Eine Interkommunikation zwischen den einen Token übertragenden Teilnehmereinheiten ist daher bei einem Token grundsätzlich nicht erforderlich.

Jeder, der im Besitz eines Tokens oder uneingeschränkten Zugriff auf den Token mit seinen Tokenelementen hat, kann diesen Token mit einer anderen Teilnehmereinheit austauschen. Der Besitz des Tokens mit seinen zumindest zwei Tokenelementen (Tokenwert und privater Teil des tokenindividuellen Schlüsselpaars) ist also gleichbedeutend mit dem Besitz des Wertes, den der Token repräsentiert.

Jedem Token im Transaktionssystem wird eine Tokenreferenz zugeordnet. Diese Zuordnung ist eineindeutig, das heißt, einem Token ist genau eine Tokenreferenz zugeordnet und jeder Tokenreferenz ist genau ein Token zugeordnet. Die Tokenreferenz ist ein öffentlicher Datensatz, der in einer Speichereinheit des Tokenreferenz-Registers des Transaktionssystems für jede Teilnehmereinheit überprüfbar abgespeichert ist.

Sowohl der Token als auch die Tokenreferenz sind einzigartig. Durch die eineindeutige Zuordnung herrscht eine 1-zu-1 Beziehung zwischen dem Token und der Tokenreferenz.

Jede Tokenreferenz im Transaktionssystem ist ein Datensatz umfassend zumindest zwei Tokenreferenz-Elemente.

Ein erstes Tokenreferenz-Element jeder Tokenreferenz ist der Tokenwert des der Tokenreferenz eindeutig zugeordneten Tokens. Der Tokenwert des Tokens ist damit identisch zum Tokenwert der zugeordneten Tokenreferenz. Beispielsweise ist der Tokenwert der Tokenreferenz eine Kopie des Tokenwerts des zugeordneten Tokens.

Ein zweites Tokenelement jeder Tokenreferenz des Transaktionssystems ist ein öffentlicher Teil des tokenindividuellen Schlüsselpaars. Dieser öffentliche Teil der Tokenreferenz bildet zusammen mit dem privaten Teil des Tokens das tokenindividuelle Schlüsselpaar. Der öffentliche Teil wird durch Anwenden einer kryptografischen Funktion auf den privaten Teil erhalten.

Diese kryptografische Funktion ist eine Einwegfunktion. Diese kryptografische Funktion ist demnach eine mathematische Funktion, die komplexitätstheoretisch "leicht" berechenbar, aber "schwer" bis praktisch unmöglich umzukehren ist. Hierbei wird unter Einwegfunktion auch eine Funktion bezeichnet, zu der bislang keine in angemessener Zeit und mit vertretbarem Aufwand praktisch ausführbare Umkehrung bekannt ist. Vorzugsweise wird eine Einwegfunktion verwendet, die auf eine Gruppe operiert, in der das diskrete Logarithmusproblem schwer zu lösen ist, wie z. B. ein kryptographisches Verfahren analog einer elliptischer-Kurve-Verschlüsselung, kurz ECC, aus einem privaten Schlüssel eines entsprechenden Kryptographie-Verfahrens. Die umgekehrte Funktion, also die Erzeugung eines Tokens (oder des Teils des elektronischen Münzdatensatzes) aus einer Tokenreferenz ist dabei sehr zeitintensiv.

Die (bloße) Kenntnis oder der Besitz einer Tokenreferenz berechtigt nicht dazu, den Tokenwert (Tokenreferenz-Element) zu verwenden/ übertragen/auszugeben. Dies stellt einen wesentlichen Unterschied zwischen der Tokenreferenz und dem Token dar und ist ein Kern der hier vorliegenden Erfindung.

Nach dem Anwenden der kryptografischen Funktion auf den privaten Teil des tokenindividuellen Schlüsselpaars wird der öffentliche Teil des tokenindividuellen Schlüsselpaars als zweites Tokenreferenz-Element erhalten.

Aus dem Tokenwert (erstes Tokenreferenz-Element) und dem öffentlichen Teil wird die Tokenreferenz gebildet. Dieses Bilden ist bevorzugt das Verketten (Konkatenation) dieser beiden Tokenreferenz-Elemente. Jede andere Art der Verknüpfung dieser beiden Tokenreferenz-Elemente ist erfindungsgemäß nicht ausgeschlossen und umfasst beispielsweise das Hintereinander-Anfügen, das Einbringen in eine TLV-Datenstruktur und/oder das logische Verknüpfen.

Eine Tokenreferenz kann bevorzugt durch eine elektronische Geldbörse (=Wallet) einer Teilnehmereinheit erzeugt werden. Dazu muss die Teilnehmereinheit Kenntnis von dem Token mit seinen Tokenelementen aufweisen. Das Erzeugen der Tokenreferenz kann durch eine elektronische Geldbörse einer Teilnehmereinheit erfolgen, die den Token senden möchte. Alternativ kann das Erzeugen der Tokenreferenz durch eine elektronische Geldbörse einer Teilnehmereinheit erfolgen, die den Token empfangen hat.

Die Verwendung einer Tokenreferenz ist nicht mit der Verwendung von Adressen von Teilnehmereinheiten in einem Blockchain-basierten Transaktionssystem vergleichbar, da im erfindungsgemäßen Tokenreferenz-Register keine Adressen der Teilnehmereinheiten verwendet werden, um eine Verfolgbarkeit der Token zu verhindern.

Das Verfahren zum Registrieren sieht einen Empfangen-Schritt vor, um eine Tokenreferenz in einem Tokenreferenz-Register im Rahmen einer Registrieranfrage zu empfangen.

Beispielsweise wird die Registrieranfrage von einer Teilnehmereinheit des Transaktionssystems oder eines Tokenherausgebers des Transaktionssystems gesendet.

Das Tokenreferenz-Register ist eine Einheit des Transaktionsregisters die die Tokenreferenzen ablegt, wodurch die zuordbaren Token registriert sind. Dieses Register kann eine zentrale Datenbank oder Speichereinheit sein. Dieses Register kann ein dezentraler Ledger, beispielsweise in einer Blockchain-Topologie sein. Das Tokenreferenz-Register kann eine Historie zu den Tokenreferenzen und/oder den Registrieranfragen führen.

Die empfangene Registrieranfrage wird durch eine Verifiziereinheit im Tokenreferenz-Register verifiziert. Dabei wird verifiziert, ob die zumindest eine Tokenreferenz der empfangenen Registrieranfrage in dem Tokenreferenz-Register bereits gespeichert ist.

Im Tokenreferenz-Register ist eine Tokenreferenz nur ein einziges Mal gespeichert. Da eine Tokenreferenz eines Tokens nur ein einziges Mal im Transaktionssystem vorhanden ist, kann durch den Verifizieren-Schritt festgestellt werden, ob versucht wurde, einen Token mehrfach auszugeben.

In einer Ausgestaltung wird im Verifizieren-Schritt durch die Verifiziereinheit des Tokenreferenz-Registers zudem festgestellt, ob die Tokenreferenz in der empfangenen Registrieranfrage einem Token eindeutig zugeordnet werden kann. Dazu muss die Tokenreferenz oder eine Ableitung der Tokenreferenz oder eine Historie (Archiv) zu der Tokenreferenz in dem Tokenreferenz-Register (beispielsweise der Archivierungseinheit) abgespeichert sein, die zu der Tokenreferenz der empfangenen Registrieranfrage zugeordnet werden kann.

In einer Ausgestaltung wird im Verifizieren-Schritt festgestellt, ob die empfangene Registrieranfrage syntaktisch korrekt ist. Damit wird beispielsweise geprüft, ob die Registrieranfrage plausibel ist, ob in der Registrieranfrage ein Kommandotyp korrekt angegeben wurde, ob der Token, der der Tokenreferenz eindeutig zugeordnet ist, tatsächlich vorhanden ist (existieren kann); und/oder ob eine Differenzbildung von Tokenwerten in der Registrieranfrage zu einem in der Registrieranfrage angegebenen Kommandotyp passt.

In einer Ausgestaltung wird im Verifizieren-Schritt festgestellt, ob eine Signatur der Registrieranfrage korrekt ist.

In einer Ausgestaltung wird im Verifizieren-Schritt zudem festgestellt, ob eine Summe von Tokenwerten aller Tokenreferenzen innerhalb der Registrieranfrage null ist. Dabei werden Eingangs-Tokenwerte und Ausgangs-Tokenwerte der Registrieranfrage aufsummiert. Bei Registrieranfragen, die von Teilnehmereinheiten stammen, muss eine Summe aller Tokenwerte der Registrieranfrage null ergeben. Ergibt die Summe nicht null, so wurde in unerlaubter Weise zusätzlich ein Tokenwert im Transaktionssystem geschaffen oder ein Tokenwert aus dem Transaktionssystem vernichtet. Damit kann ein Betrugsversuch mit nicht-vorhandenen Token oder unerlaubt generierten Token leichter erkannt werden. Bislang waren aufwendige Bereichsnachweise (zero-knowledge-proofs, ZKP) notwendig, die durch dieses Verfahren entfallen können.

Die empfangene Tokenreferenz wird in einer Speichereinheit des Tokenreferenz-Registers gespeichert. Mit dem Speichern erfolgt ein Registrieren des der empfangenen Tokenreferenz eindeutig zugeordneten Tokens im Transaktionssystem. Das Speichern erfolgt nur wenn im Verifizieren-Schritt festgestellt wird, dass die zumindest eine Tokenreferenz der empfangenen Registeranfrage nicht im Tokenreferenz-Register gespeichert ist.

Das Grundprinzip des Registrierens eines Tokens ist demnach, dass eine empfangene Registrieranfrage daraufhin verifiziert wird, ob die dem Token zugeordnete Tokenreferenz im Tokenreferenz-Register bereits bekannt ist. Ist die Tokenreferenz bereits bekannt, wird sie nicht nochmal abgespeichert. Ist die Tokenreferenz nicht bekannt, wird sie in das Tokenreferenz-Register eingetragen (gespeichert), um für zukünftige Verifizier- und Prüfschritte im Transaktionssystem verfügbar zu sein.

In einer Ausgestaltung ist die empfangene Registrieranfrage mit dem privaten Teil des tokenindividuellen Schlüsselpaars signiert, um eine Zuordnung von der Tokenreferenz zu dem Token prüfen bzw. verifizieren zu können. Ist das Verifizieren im Verifizieren-Schritt erfolgreich, also kann die Signatur verifiziert werden, dann muss der Sender der Registrieranfrage im Besitz des Tokens bzw. in Kenntnis des Tokens sein. Damit kann ein Betrugsversuch mit nicht-vorhandenen Token oder unerlaubt generierten Token erkannt werden.

In einer Ausgestaltung wird die Tokenreferenz durch ein Maskieren des zugeordneten Tokens durch Anwenden einer homomorphen Einwegfunktion auf den Token erhalten.

In einer Ausgestaltung weist das Tokenreferenz-Register eine oder mehrere Speichereinheit zum Speichern von Tokenreferenzen zum Registrieren der Token im Transaktionssystem auf.

Diese Speichereinheit(en) kann/können als eine zentrale Datenbank des Transaktionssystems geführt sein. Die Verwendung von mehreren Speichereinheiten ermöglicht - in Analogie zur Verwendung mehrerer Verifizier-Einheiten - eine parallele Bearbeitung von Registrieranfragen und beschleunigt das Registrieren im Transaktionssystem.

Die Verifiziereinheit(en) vergleicht/en beispielsweise einen Kommandotyp der empfangenen Registrieranfrage mit den Tokenwerten der empfangenen Registrieranfrage. Wird von einem Kommandotyp erwartet, dass keine Tokenwerte zum Transaktionssystem addiert oder vom Transaktionssystem subtrahiert werden sollen, so wird geprüft, ob dies mit den Tokenwerten der empfangenen Tokenreferenzen auch eingehalten wird. Bei fehlgeschlagener Verifizierung wird ein Betrugsfall erkannt und ein Registrieren verhindert.

In einer Ausgestaltung weist das Tokenreferenz-Register eine Prüfeinheit zum Prüfen einer Summe von Tokenwerten betreffend die empfangene Registrieranfrage auf. Diese Prüfeinheit vergleicht die empfangene Registrieranfrage mit einem Datenbestand der Speichereinheit ab und prüft insbesondere eine Gesamtsumme aller Tokenwerte auf Veränderung aufgrund der Registrieranfrage. Damit kann die Gültigkeit des Tokenwerts daraufhin geprüft werden, ob ein neuer Tokenwert unerlaubter Weise generiert wurde. Damit könnten auch alte Registrieranfragen und deren Erfolg geprüft werden, diese Registrieranfragen-Historie könnte verwendet werden, um ohne Belastung der Speichereinheit des Tokenreferenz-Registers, doppelt gesendete Registrieranfragen zu bearbeiten.

In einer Ausgestaltung weist das Tokenreferenz-Register eine Neuregistrierungseinheit auf, um Tokenreferenzen zu neu erzeugten Token (=neue Token) oder gelöschten Token (deaktivierte Token) eines Tokenherausgebers zu registrieren. In diese Neuregistriereinheit des Tokenreferenz-Registers können diese neu erzeugten Token und diese gelöschte Token eingetragen werden. Mit der Neuregistriereinheit kann ein Referenzwert betreffend den Gesamt-Tokenwert der im Transaktionssystem befindlichen Token auf Basis der erzeugten und/oder gelöschten Token im Tokenreferenz-Register (beispielsweise in einer Prüfeinheit davon) aktualisiert werden. Wird beispielsweise ein neuer Token generiert, so wird dessen Tokenwert zum Gesamt-Tokenwert addiert. Wird beispielsweise ein Token gelöscht, so wird dessen Tokenwert vom Gesamt-Tokenwert subtrahiert.

In einer Ausgestaltung weist die Tokenreferenz zumindest einen Zählwert als weiteres Tokenreferenz-Element auf und/oder der Token einen Zählwert als weiteres Token-Element auf. Der Zählwert kann beispielsweise die Anzahl von Offline-Transaktionen des Tokens repräsentieren. Der Zählwert kann größer als die Anzahl der Registrierungsanfragen in der Folge sein. Eine Offline-Transaktion ist dabei eine direkte Transaktion zwischen Teilnehmereinheiten im Transaktionssystem zum Übertragen von Token, ohne dass der Token im Tokenreferenz-Register registriert wird. Der Zählwert erhöht sich (inkrementiert sich) mit jeder Offline-Transaktion. Es kann systembedingt vorgesehen sein, dass Token bei Überschreiten eines vordefinierten Schwellwerts für den Zählwert automatisch im Tokenreferenz-Register registriert werden müssen.

In einer Ausgestaltung weist die Tokenreferenz zumindest eine Identität einer Teilnehmereinheit oder eines Besitzers der Teilnehmereinheit als weiteres Tokenreferenz-Element auf. Die Identität kann ein weiteres Token-Element sein. Diese Identität dient beispielsweise im Prüfen-Schritt dazu, die Tokenreferenz zu validieren oder zu verifizieren. Damit wird die Anonymität im Transaktionssystem aufgehoben und ein Betrugsfall schneller aufgedeckt.

In einer Ausgestaltung weist die Tokenreferenz zumindest ein Pseudonym einer Teilnehmereinheit oder eines Besitzers der Teilnehmereinheit als weiteres Tokenreferenz-Element auf. Das Pseudonym kann ein weiteres Token-Element sein. Dieses Pseudonym dient beispielsweise im Prüfen-Schritt dazu, die Tokenreferenz zu validieren oder zu verifizieren. Damit wird die Anonymität im Transaktionssystem nicht aufgehoben und ein Betrugsfall dennoch schneller aufgedeckt, wenn eine Einheit des Transaktionssystems das Pseudonym auflöst.

Zum Erzeugen der Tokenreferenz kann jedes weitere Tokenreferenz-Element durch eine Verkettung (Konkatenation) mit dem ersten und/oder zweiten Tokenreferenz-Element hinzugefügt werden.

In einer Ausgestaltung betrifft die Registrieranfrage eine Aufteilung eines Tokens und bevorzugt weist die Registrieranfrage eine Tokenreferenz des aufzuteilenden Tokens und jeweils eine Tokenreferenz der (zumindest zwei) aufgeteilten Token auf. Die in der Registrieranfrage enthaltenen Tokenreferenzen können durch Verkettung (Konkatenation) aneinandergefügt sein. Die Aufteilung (=Split) ist eine Modifikationsmöglichkeit an einem Token, mit der ein Tokenwert eines Tokens in zumindest zwei (kleinere) Tokenwerte aufgeteilt werden kann. Damit ist es möglich den Tokenwert zu verkleinern und auf eine Transaktionsforderung tokenwertgenauer zu reagieren. Damit wird der aufgeteilte Token ungültig und die (zumindest zwei) geteilten Token werden in dem Tokenreferenz-Register registriert, um im Transaktionssystem prüfbar zu werden.

Alternativ oder zusätzlich wird für das Aufteilen vorgesehen, dass der Tokenwert des aufzuteilenden Tokens in wenigstens einen ersten Tokenwert und in einen zweiten Tokenwert aufgeteilt wird. Die Aufteilung kann symmetrisch erfolgen, sodass die aufgeteilten Tokenwerte gleich groß sind. Die Aufteilung kann asymmetrisch erfolgen, sodass die aufgeteilten Tokenwerte ungleich groß sind.

Alternativ oder zusätzlich wird beim Aufteilen vorgesehen: Erzeugen eines neuen privaten Teils eines tokenindividuellen Schlüsselpaars für einen ersten aufgeteilten Token; Anwenden einer kryptografischen Funktion zum Erhalten eines entsprechenden öffentlichen Teils des tokenindividuellen Schlüsselpaars für den ersten aufgeteilten Token; Erzeugen eines neuen privaten Teils eines tokenindividuellen Schlüsselpaars für einen zweiten aufgeteilten Token; Anwenden einer kryptografischen Funktion zum Erhalten eines entsprechenden öffentlichen Teils des tokenindividuellen Schlüsselpaars für den zweiten aufgeteilten Token; Aufteilen des Tokenwerts in einen ersten Tokenteilwert und in einen zweiten Tokenteilwert, unter Beachtung, dass die Summe aus dem ersten Tokenteilwert und dem zweiten Tokenteilwert dem Tokenwert des aufzuteilenden Tokens entspricht; Erzeugen einer Tokenreferenz für den ersten aufgeteilten Token aufweisend den ersten Tokenteilwert und den öffentlichen Teil des tokenindividuellen Schlüsselpaars des ersten aufgeteilten Tokens; Erzeugen einer Tokenreferenz für den zweiten aufgeteilten Token aufweisend den zweiten Tokenteilwert und den öffentlichen Teil des tokenindividuellen Schlüsselpaars des zweiten aufgeteilten Tokens; und Erstellen der Registrieranfrage unter Verwendung der Tokenreferenz des aufzuteilenden Tokens, der Tokenreferenz für den ersten aufgeteilten Token und der Tokenreferenz für den zweiten aufgeteilten Token.

In einer Ausgestaltung betrifft die Registrieranfrage eine Umschaltung eines Tokens und bevorzugt weist die Registrieranfrage eine Tokenreferenz des umzuschaltenden Tokens auf. Die Umschaltung des Tokens ist eine weitere Modifikationsmöglichkeit. Die in der Registrieranfrage enthaltenen Tokenreferenzen können durch Verkettung (Konkatenation) aneinandergefügt sein. Wird ein Token von einer Teilnehmereinheit direkt an eine andere Teilnehmereinheit übertragen, beispielsweise wenn im Rahmen einer Bezahltransaktion der geldwerte Betrag als Tokenwert übertragen werden soll, so kann die empfangende Teilnehmereinheit nun den Tokenwert auf sich umregistrieren lassen. Damit wird im Tokenreferenz-Register die Umschaltung registriert.

Beim Übertragen eines Tokens zwischen zwei Teilnehmereinheiten, haben diese beiden Teilnehmereinheiten zugleich Kenntnis über den Token. Um zu verhindern, dass die sendende Teilnehmereinheit den Token auch noch bei einer anderen (dritten) Teilnehmereinheit ebenfalls verwendet (sogenanntes Mehrfachausgeben des Tokens), wird bevorzugt ein Umschalten ("Switch") des übertragenen Tokens von der ersten Teilnehmereinheit auf die zweite Teilnehmereinheit ausgeführt. Das Umschalten kann bevorzugt automatisch beim Empfangen eines Tokens in der zweiten Teilnehmereinheit erfolgen.

Alternativ oder zusätzlich wird beim Umschalten vorgesehen: Erzeugen eines neuen privaten Teils eines tokenindividuellen Schlüsselpaars; Anwenden einer kryptografischen Funktion zum Erhalten eines entsprechenden öffentlichen Teils des tokenindividuellen Schlüsselpaars; Erstellen der Registrieranfrage unter Verwendung der Tokenreferenz für den umzuschaltenden Token und den öffentlichen Teil des tokenindividuellen Schlüsselpaars für den umgeschalteten Token.

Der Tokenwert des umzuschaltenden Tokens entspricht dem Tokenwert des umgeschalteten Tokens. Beim Umschalten wird demnach ein Token mit gleichem Tokenwert aber neuem privaten Teil bei dem Tokenreferenz-Register registriert.

In einer Ausgestaltung betrifft die Registrieranfrage ein Verbinden von zumindest zwei Token betrifft und bevorzugt weist die Registrieranfrage eine Tokenreferenz des verbundenen Tokens und jeweils eine Tokenreferenz der zu verbindenden Token auf. Die in der Registrieranfrage enthaltenen Tokenreferenzen können durch Verkettung (Konkatenation) aneinandergefügt sein. Die Verbindung (= Merge) ist eine Modifikationsmöglichkeit an einem Token, mit der zwei Tokenwerte miteinander verbunden also verknüpft werden. Damit ist es möglich zwei Tokenwerte zu einem Tokenwert zu verschmelzen, um auf eine Transaktionsforderung tokenwertgenau zu reagieren. Damit werden die zu verbindenden Token ungültig und der verbundene Token wird in dem Tokenreferenz-Register registriert, um im Transaktionssystem prüfbar zu werden.

Alternativ oder zusätzlich wird beim Verbinden vorgesehen: Erzeugen eines neuen privaten Teils eines tokenindividuellen Schlüsselpaars; Anwenden einer kryptografischen Funktion zum Erhalten eines entsprechenden öffentlichen Teils des tokenindividuellen Schlüsselpaars für den verbundenen Token; Berechnen des Tokenwerts für den verbundenen Token durch Bilden der Summe aus den jeweiligen Tokenwerten der zumindest zwei zu verbindenden Token; Erzeugen einer Tokenreferenz für den verbundenen Token aufweisend den berechneten Tokenwert und den öffentlichen Teil des tokenindividuellen Schlüsselpaars für den verbundenen Token; und Erstellen der Registrieranfrage unter Verwendung jeder Tokenreferenz der zu verbindenen Token und der Tokenreferenz für den verbundenen Token.

In einer Ausgestaltung wird eine Registrieranfrage von einem Tokenherausgeber versendet, wobei die Registrieranfrage ein Erstellen eines Tokens oder ein Löschen eines Tokens betrifft.

Ein Tokenherausgeber ist im Gegensatz zu einer Teilnehmereinheit eine privilegierte Instanz im Transaktionssystem, durch die Token erzeugt und gelöscht werden können. Eine Teilnehmereinheit kann keinen Token erzeugen oder löschen, sie kann Token nur modifizieren (Umschalten, Aufteilen, Verbinden).

Der Token ist in einem Tokenspeicher abgelegt, auf den die Teilnehmereinheit exklusiv zugreifen kann. Dieser Tokenspeicher kann eine Vielzahl von Token aufweisen, beispielsweise kann in einem Datenspeicher der Teilnehmereinheit die Vielzahl von Token abgelegt sein. Der Datenspeicher kann beispielsweise intern, extern oder virtuell sein. In einer Ausgestaltung kann beim Empfangen eines Tokens automatisch ein "Verbinden" stattfinden, sodass bevorzugt nur ein (oder eine bestimmte Anzahl an) Token in der Teilnehmereinheit abgelegt sind.

Die Teilnehmereinheit kann beispielsweise ein mobiles Endgerät, wie z.B. ein Smartphone, ein Tablet-Computer, ein Computer, ein Server oder eine Maschine sein. Die Teilnehmereinheit kann eine Smartcard sein, die betriebsbereit in einem Endgerät eingebracht ist.

Der Datenspeicher ist beispielsweise einen Geldbörsenspeicher einer elektronischen Geldbörse (Wallet). Die elektronische Geldbörse ist beispielsweise eine Softwareapplikation, die auf einer Teilnehmereinheit ausführbar abgespeichert ist. Die elektronische Geldbörse (Wallet) kann der Teilnehmereinheit die Teilnahme am Transaktionssystem ermöglichen. So kann die elektronische Geldbörse eine Registrieranfrage generieren, um einen Token in einem Tokenreferenz-Register zu registrieren. Zudem kann die elektronische Geldbörse Modifikationen (Umschalten, Verbinden, Aufteilen) an einem Token vornehmen und die dabei möglicherweise notwendigen Registrieranfragen generieren und an das Tokenreferenz-Register senden. Zudem kann die elektronische Geldbörse Token an eine andere Geldbörse (in einer anderen Teilnehmereinheit) übertragen.

Eine Transaktion im Transaktionssystem ist vorzugsweise atomar.

Das Tokenreferenz-Register hat demnach Kenntnis über Tokenreferenzen von Token des Transaktionssystems und führt bevorzugt auch die Verarbeitungen bzw. Modifikationen an den Token (Token-Historie). Die Transaktionen mit den Token wird in dem Tokenreferenz-Register nicht registriert und findet in einer Direkttransaktionsschicht des Transaktionssystems direkt zwischen Teilnehmereinheiten des Transaktionssystems statt.

Erfindungsgemäß ist ein Tokenreferenz-Register für ein Transaktionssystem vorgesehen, das eingerichtet ist zum Durchführen der Verfahrensschritte gemäß dem zuvor beschriebenen Verfahren.

In einer Ausgestaltung weist das Tokenreferenz-Register auf: zumindest eine Speichereinheit zum Speichern von Tokenreferenzen zum Registrieren von Token im Transaktionssystem; zumindest eine Verifiziereinheit zum Verifzieren, ob eine Tokenreferenz einer empfangenen Registrieranfrage in dem Tokenreferenz-Register gespeichert ist; eine Archivierungseinheit zum Speichern von Folgen von Registrieranfragen; und/oder eine Neuregistriereinheit zum Registrieren von von einem Tokenherausgeber neu generierten Token oder von von einem Tokenherausgeber gelöschten Token.

In einer bevorzugten Ausgestaltung ist die Speichereinheit derart eingerichtet, dass eine Teilnehmereinheit oder eine Registrieranfrage-Einheit nur Schreibzugriff auf die Speichereinheit hat und/oder die Archivierungseinheit und/oder die Verifiziereinheit einen Schreib- und Lesezugriff auf die Speichereinheit hat.

Die Trennung des Tokenreferenz-Registers in eine Speichereinheit (kein lesender Zugriff für eine Teilnehmereinheit) und Verifizier-Einheit (mit schreibendem und lesendem Zugriff auf die Speichereinheit) ermöglicht ein schnelles Bearbeiten von Registrieranfragen. So kann die Speichereinheit auf Basis einer Registrieranfrage aktualisiert werden, während eine Verifiziereinheit die Speichereinheit dazu auslesen kann. Das Tokenreferenz-Register kann in einer DLT-Architektur vorliegen oder als ein Zentralregister mit ggf. einer Vielzahl von parallel arbeitenden Verifizier-Einheiten und ggf. einer Vielzahl von parallel arbeitenden Speichereinheiten ausgebildet sein.

Das Tokenreferenz-Register ist eingerichtet zum Empfangen einer Vielzahl von Registrieranfragen, die parallel in einer Mehrzahl von Verifizier-Einheiten darauf verifiziert werden, ob die in der jeweils empfangenen Registrieranfrage enthaltene zumindest eine Tokenreferenz einem Token des Transaktionssystems eindeutig zugeordnet werden kann, wobei alle Registrieranfragen einer Folge von Registrieranfragen in jeweils der gleichen Verifiziereinheit sequenziell hintereinander verifiziert werde. Damit kann die Verifiziereinheit(en) Einzelregistrieranfragen, Registrieranfragestapel oder auch Folgen von Registrieranfragen bearbeiten, wobei das oben erwähnte "Load Balancing" ermöglicht werden kann. Die Folgen von Registrieranfragen können sequenziell verarbeitet werden. Die Verifiziereinheit benötigt keine Kenntnis darüber, ob die empfangene Registrieranfrage ein Teil einer Folge von Registrieranfragen ist.

Erfindungsgemäß ist ein Transaktionssystem vorgesehen, das aufweist eine Registerschicht mit einem Tokenreferenz-Register der vorhergehenden Art zum Registrieren von Tokenreferenzen und eine Direkttransaktionsschicht mit einer Vielzahl von Teilnehmereinheiten, eingerichtet zum direkten Austausch von Token untereinander.

Erfindungsgemäß ist also ein zweischichtiges Transaktionssystem aus einer Direkttransaktionsschicht zum direkten Austauschen von Token und einer Registerschicht vorgesehen. In der Registerschicht werden keine Transaktionen protokolliert, sondern ausschließlich Tokenreferenzen abgespeichert und Modifikationen zu Token über entsprechend angepasste Tokenreferenzen zum Zweck der Verifizierung der Gültigkeit von Token abgespeichert. So wird die Anonymität der Teilnehmer des Transaktionssystems gewährleistet. Das Tokenreferenz-Register gibt auf Anfrage Auskunft über die Tokenreferenzen, die eindeutig zu den Token des Transaktionssystems zugeordnet sind, um beispielsweise eine Mehrfach-Ausgabe des gleichen Tokens zu vermeiden oder die Echtheit des Tokens zu verifizieren.

Die Speichereinheit des Tokenreferenz-Registers speichert bevorzugt nur Tokenreferenzen von im Transaktionssystem tatsächlich vorhandenen Token. Sobald ein Token modifiziert wird und eine entsprechende (modifizierte) Tokenreferenz registriert werden soll, werden die (alten) Tokenreferenzen ungültig und (nur) die modifizierten Tokenreferenzen werden in der Speichereinheit gespeichert.

Alte (also ungültig gewordene) Tokenreferenzen werden in einer Ausgestaltung aus der Speichereinheit gelöscht und in einem Tokenreferenz-Archiv archiviert. Das Tokenreferenz-Archiv kann ein Teil der Archivierungseinheit sein, es kann aber auch als getrennte Einheit im Tokenreferenz-Register oder im Transaktionssystem vorgesehen sein. Das Tokenreferenz-Archiv kann auch vollständig durch die Archivierungseinheit ersetzt werden, wenn dort alle Registrieranfragen vollständig abgelegt sind. Das zeitlich abhängige Löschen von Registrieranfragen kann auch für das Löschen von alten Tokenreferenzen gelten.

Erfindungsgemäß ist auch eine Teilnehmereinheit in einem Transaktionssystem vorgesehen mit: einer Schnittstelle, die eingerichtet ist zum Übertragen von Token zu einer anderen Teilnehmereinheit und Senden, an ein Tokenreferenz-Register oder eine Registrieranfrage-Einheit des Transaktionssystems, eine Registrieranfrage aus einer Folge von Registrieranfragen, wobei jede Registrieranfrage zumindest eine Tokenreferenz.

Zudem hat die Teilnehmereinheit Zugriffsmittel auf einen Tokenspeicher und/oder die Teilnehmereinheit weist einen Tokenspeicher auf, wobei im Tokenspeicher zumindest ein Token der Teilnehmereinheit mit der Folge von Registrieranfragen abgelegt ist.

Zudem hat die Teilnehmereinheit eine Recheneinheit, die eingerichtet ist zum Anwenden einer kryptografischen Einwegfunktion auf einen privaten Teil eines tokenindividuellen Schlüsselpaars eines Tokens des Tokenspeichers zum Erhalten einer Tokenreferenz; und zum Modifizieren von Token. Das Modifizieren von Token umfasst insbesondere das Aufteilen von Token, das Verbinden von Token und/oder das Umschalten von Token gemäß der oben beschriebenen Art.

Die Teilnehmereinheit kann derart eingerichtet sein, dass in deren Tokenspeicher nur ein Token gespeichert ist. Dieser Token wird für direkte Transaktionen aufgeteilt (SPLIT), um einen korrekten Tokenwert entsprechend der zu tätigenden Transaktion zu erzeugen. Werden Token in der Teilnehmereinheit empfangen, wird der empfangene Token mit dem Token des Tokenspeichers sofort verbunden (MERGE).

Zum Übertragen eines Tokens an eine andere Teilnehmereinheit kann dieser Token des Tokenspeichers demnach aufgeteilt (SPLIT) werden, wobei dazu eine Registrieranfrage erzeugt wird. Bevorzugt weist die Registrieranfrage eine Tokenreferenz des aufzuteilenden Tokens und jeweils eine Tokenreferenz der aufgeteilten Token auf.

Beim Empfangen eines Tokens von einer anderen Teilnehmereinheit wird der empfangene Token mit dem Token im Tokenspeicher verbunden, wobei dazu eine Registrieranfrage erzeugt wird. Bevorzugt weist die Registrieranfrage eine Tokenreferenz des verbundenen Tokens und jeweils eine Tokenreferenz der zu verbindenden Token auf.

Eine Teilnehmereinheit kann vorliegend ein sicheres Element sein, das einen gesicherten Zugriff auf Token in einem Tokenspeicher hat. Das sichere Element ist beispielsweise betriebsbereit in einem Endgerät eingebracht. Das sichere Element und oder das Endgerät haben ein spezielles Computerprogrammprodukt (elektronische Geldbörse, Wallet), insbesondere in Form einer abgesicherten Laufzeitumgebung innerhalb eines Betriebssystems eines Endgeräts, englisch Trusted Execution Environments, TEE, gespeichert auf einem Datenspeicher, beispielsweise eines mobilen Endgeräts, einer Maschine, vorzugsweise Bankautomat. Alternativ ist das sichere Element beispielsweise als spezielle Hardware, insbesondere in Form eines gesicherten Hardware-Plattform-Moduls, englisch Trusted Platform Module, TPM oder als ein eingebettetes Sicherheitsmodul, eUICC, eSIM, ausgebildet. Das sichere Element stellt eine vertrauenswürdige Umgebung bereit.

Die Kommunikation zwischen Endgerät und sicherem Element als Teilnehmereinheit kann mittels APDU erfolgen. Die Kommunikation zwischen Endgerät und Tokenreferenz-Register oder Herausgebereinheit kann mittels API-Aufrufen erfolgen. Das Endgerät ist dabei nur ein Protokollübersetzer und verändert die Registrieranfragen nicht.

Die Kommunikation zwischen zwei Teilnehmereinheiten zum Austauschen von Token kann drahtlos oder drahtgebunden, oder z.B. auch auf optischem Weg, bevorzugt über QR-Code oder Barcode, erfolgen und kann als ein gesicherter Kanal ausgebildet sein. Der Austausch von Token ist beispielsweise durch kryptografische Schlüssel zusätzlich transportgesichert, beispielsweise einem für einen Token-Austausch ausgehandelten Sitzungsschlüssel oder auf Basis eines teilnehmereinheitenindividuellen Schlüsselpaars.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Fig. 1 zeigt ein Ausführungsbeispiel eines Transaktionssystems gemäß der Erfindung;

Fig. 2 zeigt ein Ausführungsbeispiel eines Tokenreferenz-Registers gemäß der Erfindung;

Fig. 3a zeigt eine Übersicht über erfindungsgemäße Kommandos für Token;

Fig. 3b zeigt eine Übersicht über erfindungsgemäße signierte Registrieranfragen für die erfindungsgemäßen Kommandos;

Fig. 4 zeigt ein Ausführungsbeispiel eines Ablaufdiagrams eines erfindungsgemäßen Verfahrens zum Erstellen und Registrieren eines Tokens und eine Übersicht über die Kommandodetails in Abhängigkeit der Transaktionsschicht;

Fig. 5 zeigt ein Ausführungsbeispiel eines Ablaufdiagrams eines erfindungsgemäßen Verfahrens zum Löschen eines Tokens und Registrieren;

Fig. 6 zeigt ein Ausführungsbeispiel eines Ablaufdiagrams eines erfindungsgemäßen Verfahrens zum Aufteilen und Registrieren eines Tokens und eine Übersicht über die Kommandodetails in Abhängigkeit der Transaktionsschicht;

Fig. 7 zeigt ein Ausführungsbeispiel eines Ablaufdiagrams eines erfindungsgemäßen Verfahrens zum Verbinden und Registrieren eines Tokens und eine Übersicht über die Kommandodetails in Abhängigkeit der Transaktionsschicht;

Fig. 8 zeigt ein Ausführungsbeispiel eines Ablaufdiagrams eines erfindungsgemäßen Verfahrens zum Umschalten und Registrieren eines Tokens und eine Übersicht über die Kommandodetails in Abhängigkeit der Transaktionsschicht; und

Fig. 9 zeigt ein weiteres Ausführungsbeispiel eines Tokenreferenz-Registers gemäß der Erfindung.

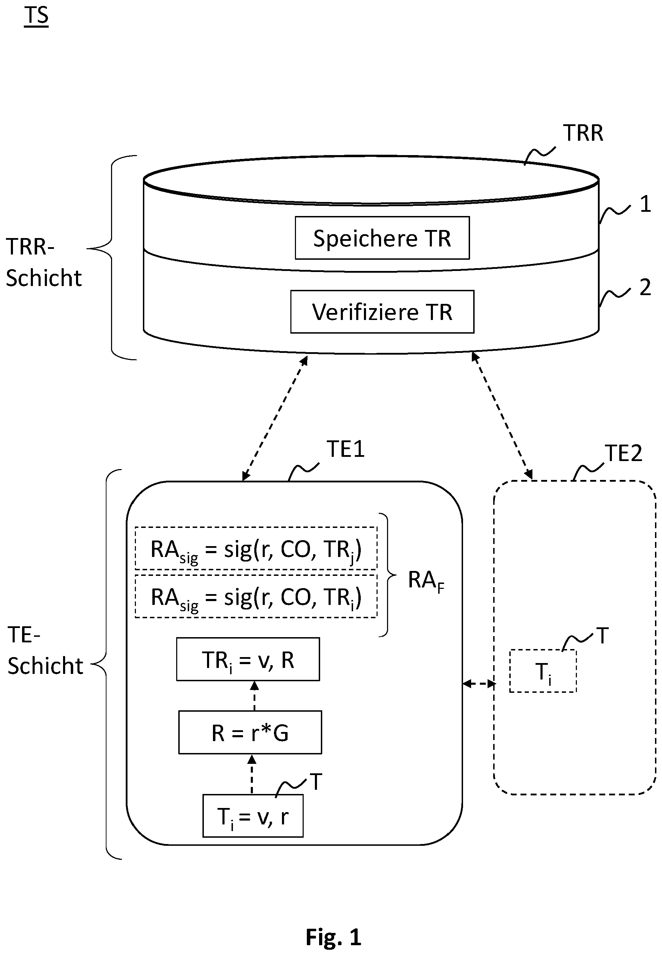

Fig. 1 zeigt ein Ausführungsbeispiel eines Transaktionssystems TS gemäß der Erfindung. Das Transaktionssystem TS umfasst eine Registerschicht TRR-Schicht, in der ein Tokenreferenz-Register TRR angeordnet ist. Das TS umfasst zudem eine Direkttransaktionsschicht TE-Schicht, in der eine Vielzahl von Teilnehmereinheiten TE vorgesehen sein können, stellvertretend sind zwei Teilnehmereinheiten TE1, TE2 gezeigt.

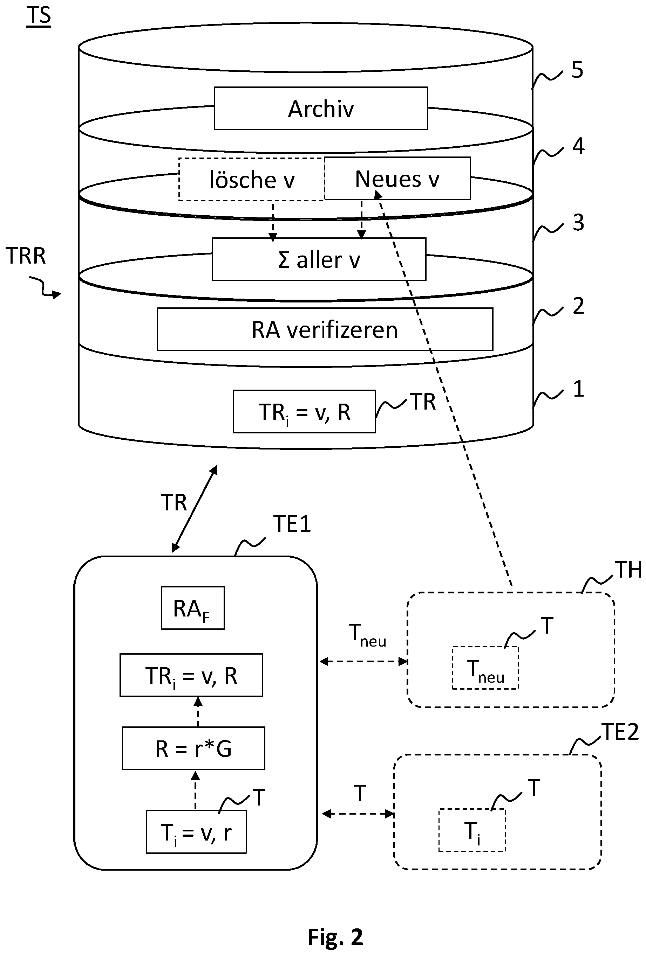

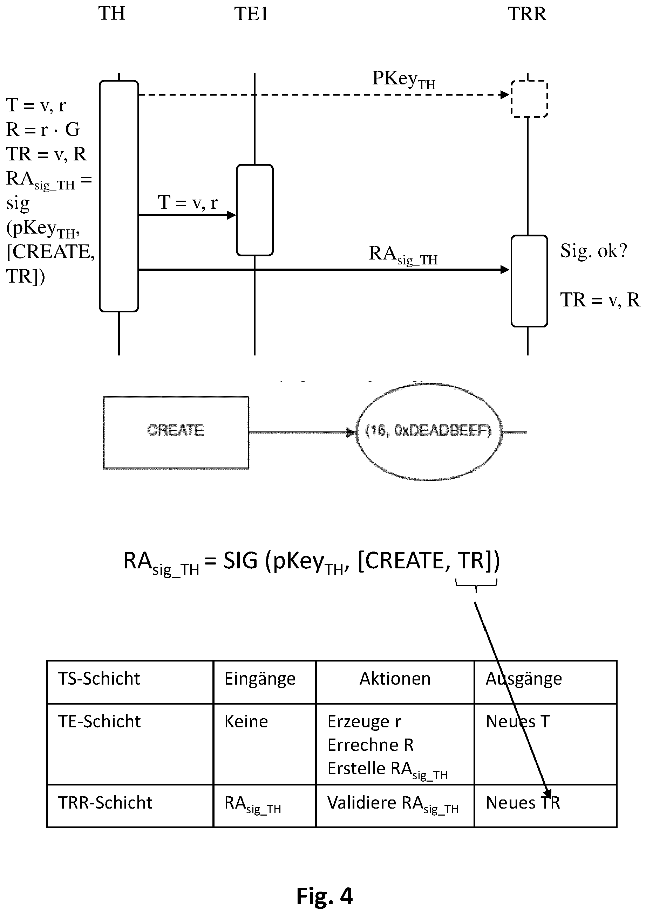

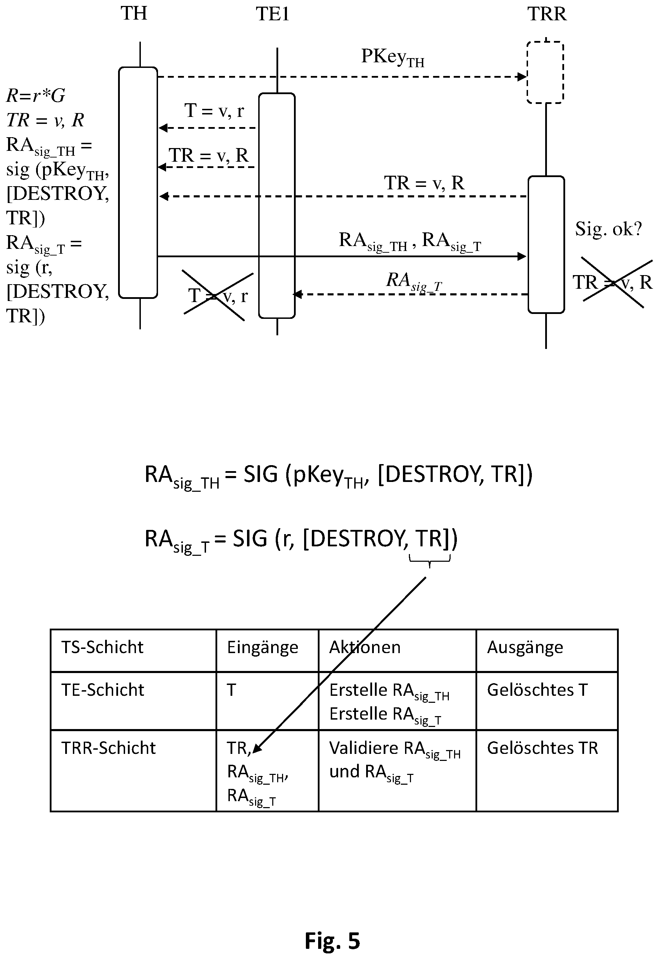

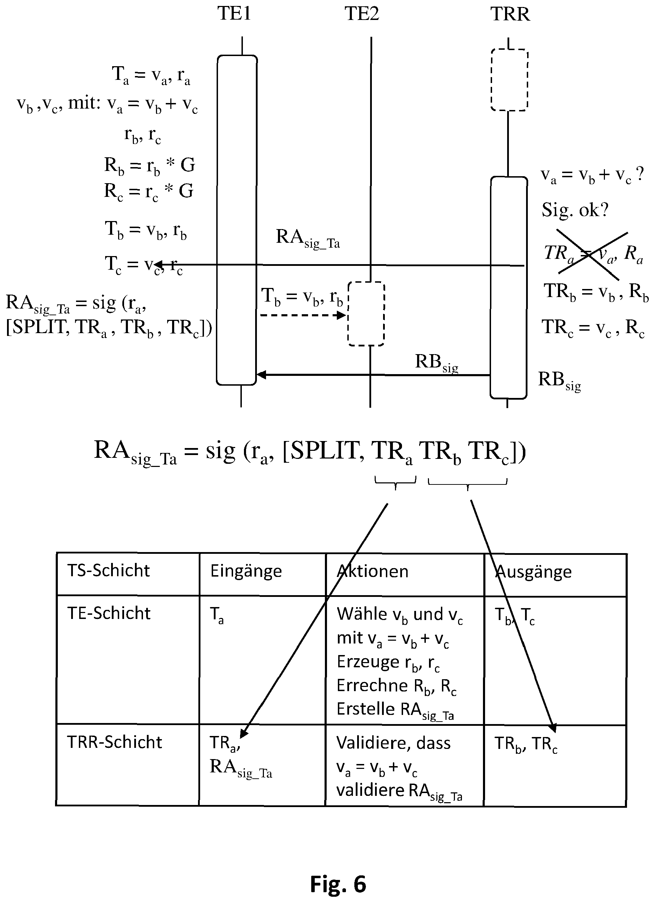

Die Teilnehmereinheiten TE des Transaktionssystem TS sind eingerichtet, Token T direkt untereinander auszutauschen. Im Fall von Fig. 1 sind die Token Bezahl-Token, die auch als digitale Münze bezeichnet werden. Jeder Token T wird von einem Tokenherausgeber TH generiert (in Fig. 1 nicht gezeigt, siehe Fig. 2). Jeder Token T kann von jeder Teilnehmereinheit TE modifiziert, also aufgeteilt, verbunden oder umgeschaltet werden (siehe Figuren 6 bis 8) und kann von dem Tokenherausgeber TH generiert (Siehe Fig. 4) und auch gelöscht werden (siehe Fig. 5). Ein Tokenherausgeber TH ist beispielsweise eine Zentralbank.

Ein Token T wird durch einen Tokenwert v und eine Zufallszahl r als Tokenelemente eindeutig im Transaktionssystem TS repräsentiert. Der Tokenwert v kann in einem Wertebereich von 1 bis $2^{31}$-1 angegeben werden. Die Zufallszahl r kann eine Zahl im Bereich von 0 bis $2^{256}$ -1, also die Ordnung einer elliptischen Kurve, beispielsweise secp256r1, sein.

Die Zufallszahl r ist dabei ein privater Teil eines tokenindividuellen Schlüsselpaars. Die Zufallszahl r ist im Transaktionssystem TS einmalig und geheim und darf nicht veröffentlicht oder wiederverwendet werden. Die Erzeugung der Zufallszahl r darf nichtvorhersehbar sein.

Beispielsweise ist der Tokenwert v ein 32 Bit großes Tokenelement vom Typ integer. Beispielsweise ist die Zufallszahl r ein 32 Byte großes Tokenelement vom Typ integer. Eine Teilnehmereinheit TE hat exklusiven Zugriff auf diesen Tokenspeicher oder umfasst diesen Tokenspeicher in einem Datenspeicher der Teilnehmereinheit TE.

Ein Token kann als ein TLV kodierter Datensatz in einem Tokenspeicher abgelegt sein und weist dann einen eindeutigen Tag und eine Längeninformation auf, beispielsweise in folgendem Format auf.

| Name | Tag (hex) | Länge | Tokenwert v | Zufallszahl r |
|---|---|---|---|---|
| TLV-kodierter Token | 42 | 1 Byte | 4 Byte | 32 Byte |

Ein Beispiel eines TLV-codierten Token in hexadezimaler Form ist nachfolgend dargestellt:
42 24 00 00 40 00 00 01 02 03 04 05 06 07 08 09 0A 0B 0C 0D 0E
0F 10 11 12 13 14 15 16 17 18 19 1A 1B 1C 1D 1E 1F
und wird wie folgt interpretiert:

"42" ist der Tag zur Identifizierung des TLV-kodierten Tokens T;

"24" zeigt die Länge an, hier also, dass es sich um einen 36 Byte großen Datensatz handelt; "00 00 40 00" ist der Tokenwert (integer) $v$ = 16384 und beträgt demnach € 163,84;

"00 01 02 03 04 05 06 07 08 09 ... 1D 1E 1F" ist die Zufallszahl $r$ als integer.

Für jeden Token T kann im Tokenreferenz-Register TRR eine Tokenreferenz TR gespeichert werden. Die Tokenreferenz TR umfasst den Tokenwert $v$ des zugeordneten Tokens T und einen öffentlichen Teil R des tokenindividuellen Schlüsselpaars. Die Tokenreferenz TR des Tokens T kann jederzeit im Register TRR des Transaktionssystems TS eingesehen werden. Damit ist der Tokenwert $v$ eines Tokens T durch das Tokenreferenz-Register TRR offengelegt.

Der öffentliche Teil R des tokenindividuellen Schlüsselpaars wird durch Anwenden einer kryptografischen Funktion auf den privaten Teil $r$ des tokenindividuellen Schlüsselpaars erzeugt. Diese Funktion ist schwer umkehrbar und gibt dem Transaktionssystem TS so die gebotene Sicherheit. Es gilt R = $r$ * G, wobei G beispielsweise ein globaler Parameter des Transaktionssystems TS, bspw. ein Generatorpunkt einer elliptischen Kurve, hier der secp256r1-Kurve, sein kann.

Die Tokenreferenz TR wird dann gebildet durch den Tokenwert $v$ des Tokens und den öffentlichen Teil R des Schlüsselpaars. Die Tokenreferenz TR ist somit die Verknüpfung oder Verkettung von Tokenwert $v$ und öffentlichem Teil R.

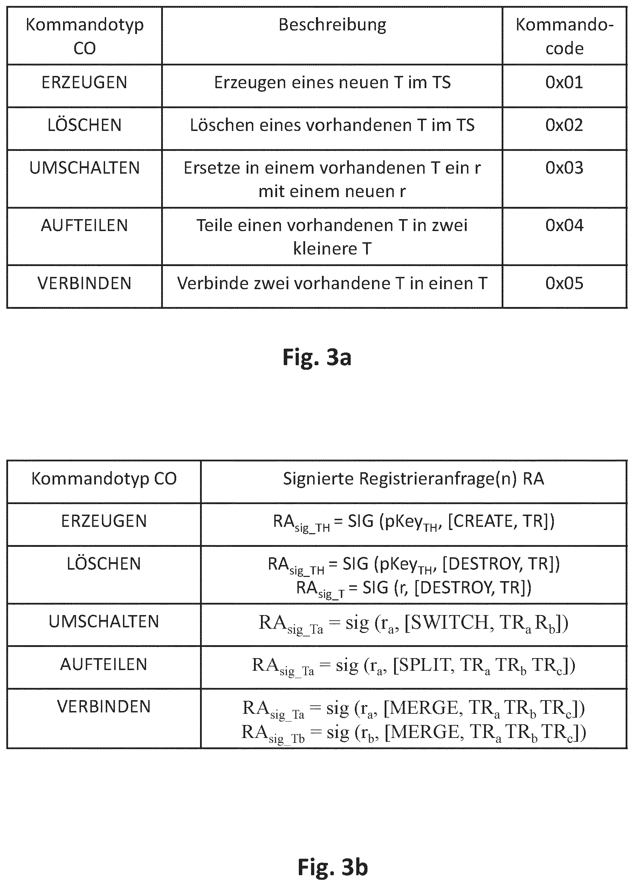

Diese Tokenreferenz TR kann als Registrieranfrage RA ggf. zusammen mit einem Kommando (siehe Übersicht in Figuren 3a und 3b) bezüglich des Tokens T an das Tokenreferenz-Register TRR gesendet werden.

Zusätzlich kann die Registrieranfrage RA mit dem privaten Teil $r$ des tokenindividuellen Schlüsselpaars signiert werden. Das Signieren ermöglicht es, zu verifizieren, ob der Sender der Tokenreferenz TR im Besitz des Tokens T war, wodurch die Sicherheit im Transaktionssystem TS weiter erhöht ist.

In der Teilnehmereinheit wird die signierte Registrieranfrage RAsig als ein sogenannter PROOF abgelegt, beispielsweise in folgendem Format:

| Typ | Tag (hex) | Länge | Daten |
|-----|-----------|-------|-------|
| PROOF | 4A | N Bytes | |

Ein Beispiel eines PROOF (=RA$_{sig}$) in hexadezimaler Form ist nachfolgend dargestellt:

4A 81 8F 03 11 12 13 14 15 16 17 18 19 1A 1B 1C 1D 1E 1F 20 21 22 23 24 25 26 27 28 29 2A 2B 2C 2D 2E 2F 30 31 32 33 34 35 36 37 38 39 3A 3B 3C 3D 3E 3F 40 41 42 43 44 45 46 47 48 49 4A 4B 4C 4D 4E 4F 50 51 52 53 54 55 56 30 46 11 12 13 14 15 16 17 18 19 1A 1B 1C 1D 1E 1F 20 21 22 23 24 25 26 27 28 29 2A 2B 2C 2D 2E 2F 30 31 32 33 34 35 36 37 38 39 3A 3B 3C 3D 3E 3F 40 41 42 43 44 45 46 47 48 49 4A 4B 4C 4D 4E 4F 50 51 52 53 54 55 56

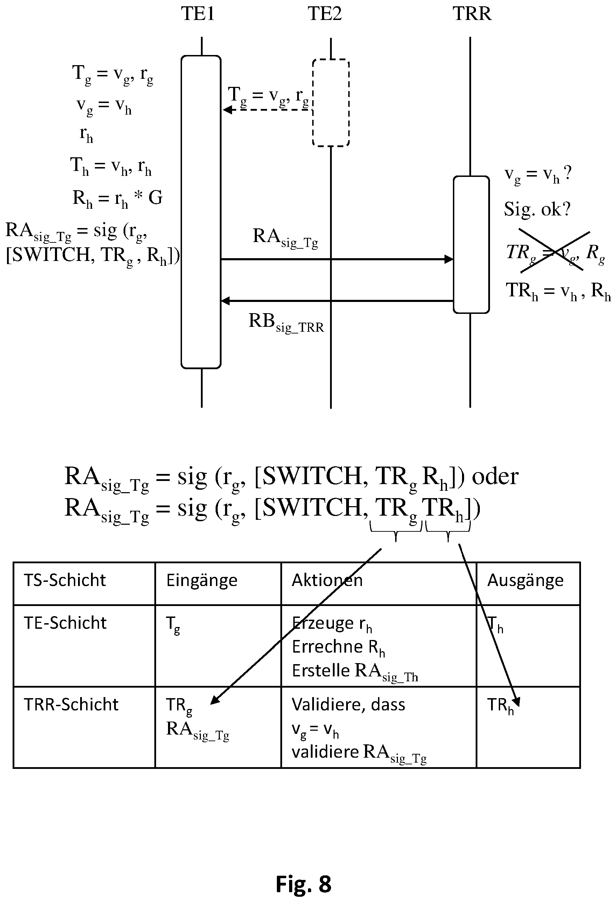

und wird wie folgt interpretiert (siehe auch Fig. 8 zur Struktur einer Umschalte-Registrieranfrage):

"4A" ist der Tag zur Identifizierung des TLV-Proof RA$_{sig\_Th}$;

"81 8F" zeigt die Länge an;

"03" zeig an, dass es sich um eine Umschalte (=SWITCH) Registrieranfrage handelt;

"11 12 13 14" ist der Tokenwert $v_g$;

"15 16 17 18 19 1A 1B 1C 1D 1E 1F 20 21 22 23 24 25 26 27 28 29 2A 2B 2C 2D 2E 2F 30 31 32 33 34 35" ist der öffentliche Teil $R_g$;

"36 37 38 39 3A 3B 3C 3D 3E 3F 40 41 42 43 44 45 46 47 48 49 4A 4B 4C 4D 4E 4F 50 51 52 53 54 55 56" ist der öffentliche Teil $R_h$;

"30 46 11 12 13 14 15 16 17 18 19 1A 1B 1C 1D 1E 1F 20 21 22 23 24 25 26 27 28 29 2A 2B 2C 2D 2E 2F 30 31 3233 34 35 36 37 38 39 3A 3B 3C 3D 3E 3F 40 4142 43 44 45 46 47 48 49 4A 4B 4C 4D 4E 4F 50 51 52 53 54 55 56" ist die Signatur als X690-Sequenz.

Diese Registrieranfrage RA kann an das Tokenreferenz-Register TRR gesendet werden. Im Tokenreferenz-Register TRR wird diese Registrieranfrage RA empfangen. Nach Prüfung der Registrieranfrage RA durch das Tokenreferenz-Register TRR wird die Tokenreferenz TR im Tokenreferenz-Register TRR abgelegt, wodurch der Token T im Transaktionssystem TS registriert ist.

Die Tokenreferenz TR ist dem Token T eindeutig zugeordnet und dient zur Registrierung des Tokens T im Transaktionssystem TS. Die Tokenreferenz TR ist demnach die öffentliche Repräsentation des Tokens T aus der Direkttransaktionsschicht TE-Schicht. Das alleinige Wissen oder nur der Besitz der Tokenreferenz TR erlaubt es nicht, den Token T zu übertragen und ist nicht gleichbedeutend damit, dass die TE im Besitz des Tokens T ist. Die Tokenreferenz TR dient zur Verhinderung von Mehrfachausgabe-Versuchen und prüft, ob Tokenwerte v in unzulässiger Weise generiert wurden. Deshalb wird im Tokenreferenz-Register TRR die Tokenreferenz TR und ggf. die Historie über die Token T und die entsprechenden Registrieranfragen RA von Teilnehmereinheiten TE abgelegt.

Die Token T werden beispielsweise in Tokenspeichern bzw. elektronischen Geldbörsen, sogenannten Wallets, einer TE abgelegt. Diese Wallets sind beispielsweise Softwareapplikationen innerhalb der Teilnehmereinheiten TE oder eines Endgeräts, in dem die TE betriebsbereit eingebracht ist. Ein Wallet kann als Applikation auf einem Smartphone, einer Smartcard oder einem Bezahlterminal eingerichtet sein. Das Wallet dient dazu, Token T der TE sicher zu verwalten, Tokenreferenzen TR zu erzeugen, Token T zu modifizieren und/oder Token T auszutauschen. Wallets dienen dazu, mit dem Tokenreferenz-Register TRR zu kommunizieren, Registrieranfragen RA an das Tokenreferenz-Register TRR zu generieren und/oder Transaktion von Token T zu einer Teilnehmereinheit TE vorzunehmen.

Für eine Transaktion mit einer Teilnehmereinheit TE ist es nicht notwendig, dass eine Kommunikationsverbindung zu dem Tokenreferenz-Register TRR des Transaktionssystems TS besteht. Das Transaktionssystem TS ist dazu eingerichtet, eine Transaktion offline, also ohne Kommunikationsverbindung mit dem Tokenreferenz-Register TRR, durchzuführen. Eine entsprechende Registrierung von Token T kann daher einer Übertragung des Token T zu einer Teilnehmereinheit TE zeitlich nachgelagert sein.

Das Tokenreferenz-Register TRR ist eine Einheit des Transaktionssystems TS und ist entweder ein zentrales Register oder eine zentrale Datenbank des Transaktionssystems TS oder ein dezentrales Register oder eine dezentrale Datenbank (DLT) des Transaktionssystems TS.

Das Übertragen einer Tokenreferenz TR von einer elektronischen Geldbörse erfolgt beispielsweise als APDU Kommando(s) zu einem Endgerät (Smartphone) als Teilnehmereinheit TE. Ein APDU ist ein kombinierter Kommando-/Datenblock eines Verbindungsprotokolls zwischen dem sicheren Element und dem Endgerät. Die Struktur der APDU ist durch den Standard ISO-7816-4 definiert. Das Endgerät entpackt APDU Kommando(s) und überträgt die Daten in API-Aufrufen an das Tokenreferenz-Register TRR, wo sie in HTTP-Codes umgesetzt werden.

In Fig. 2 ist ein Ausführungsbeispiel eines Tokenreferenz-Register TRR der Erfindung dargestellt.

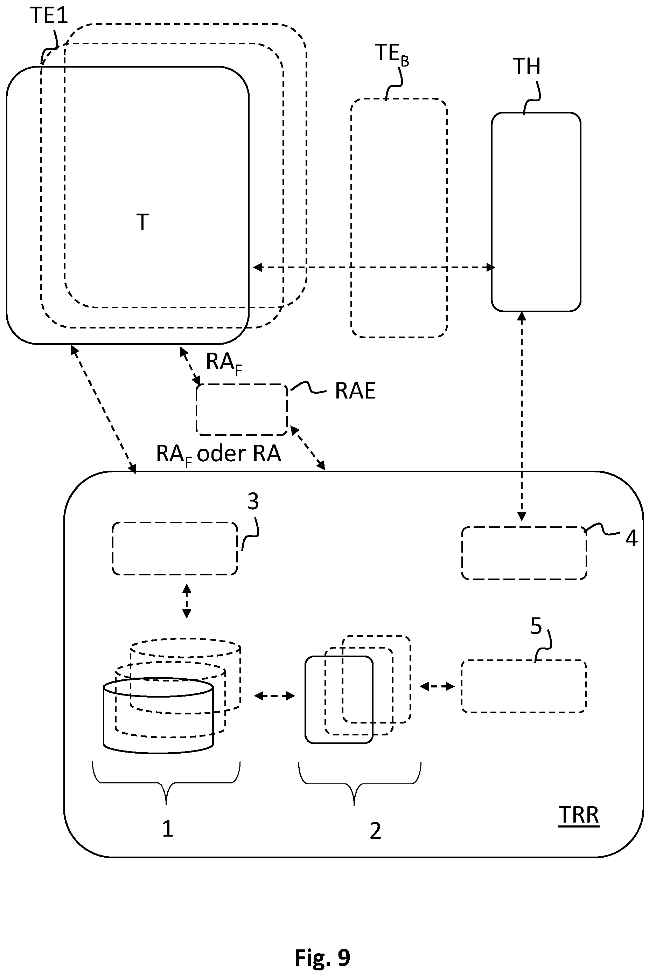

Das Tokenreferenz-Register TRR verwaltet insbesondere den Speicherort für die Tokenreferenzen TR, hier als Datenbank 1 als Beispiel einer Speichereinheit im Tokenreferenz-Register TRR dargestellt. Stellvertretend ist in der Datenbank 1 das TR zum Token T der Teilnehmereinheit TE1 eingetragen. Diese Datenbank 1 kann aus einem Zusammenschluss vieler Datenbanken bestehen (siehe auch Fig. 9), die untereinander vernetzt sind. Zum einfachen Auffinden einer Tokenreferenz TR, ist der öffentliche Teil R der Tokenreferenz TR gleichzeitig ein Datenbankenindex in der Datenbank 1, denn sowohl ein Index einer Datenbank als auch ein öffentlicher Teil R einer Tokenreferenz TR müssen im Transaktionssystem TS eineindeutig sein.

Zudem kann das Tokenreferenz-Register TRR zumindest eine Verifiziereinheit 2 umfassen. Die Verifiziereinheit 2 des Tokenreferenz-Registers TRR verifiziert Registrieranfragen RA. Dabei kann eine syntaktische Korrektheit oder auch die korrekte Angabe eines Kommandos in der Registrieranfrage RA verifiziert werden. Insbesondere kann die Registrieranfrage RA auf Wertneutralität geprüft werden. Auch eine Historie aus alten (vergangenen) Registrieranfragen RA bezüglich eines Tokens T kann dabei verifiziert werden. Die Trennung dieser Verifiziereinheit 2 von der Datenbank 1 verteilt die Aufgaben von Ablegen und Prüfen und erhöht die Geschwindigkeit im Tokenreferenz-Register TRR.

Zudem kann das Tokenreferenz-Register TRR eine Prüfeinheit 3 umfassen, die prüft, ob (beispielsweise mit dem Tokenwert v einer empfangenen Tokenreferenz TR) ein Gesamt-Tokenwert $\Sigma$ im Transaktionssystem TS verändert wird. Die Prüfeinheit 3 vergleicht einen Gesamt-Referenzwert mit der tatsächlichen Summe der in der Datenbank 1 gespeicherten Tokenwerte. Ist dies der Fall, dann wurde ein neuer Tokenwert v geschaffen oder ein existierender Tokenwert v vernichtet. Dies dürfen nur privilegierte Einheiten, wie einer Herausgeberinstanz TH, im Transaktionssystem TS. Wenn ein derartiges Verändern der Gesamtsumme der Tokenwerte durch eine Tokenreferenz TR einer Teilnehmereinheit TE erkannt wird, dann kann von einem Betrugsfall ausgegangen werden. Somit kann eine illegale Generierung von Tokenwerten v sehr leicht entdeckt und verhindert werden.

Die Prüfung des Gesamt-Tokenwerts durch die Prüfeinheit 3 stellt ein weiteres Sicherheitskonzept im Transaktionssystem TS dar.

Zudem kann das Tokenreferenz-Register TRR eine Neuregistriereinheit 4 umfassen, in die neu generierte Tokenreferenzen TR eines Tokenherausgebers TH erst-registriert werden oder zu löschende Tokenreferenzen TR entregistriert werden. Damit wird eine Funktionstrennung zwischen Tokenreferenzen TR von privilegierten Teilnehmern, wie einem Tokenherausgeber TH, von Tokenreferenzen TR von unprivilegierten Teilnehmern, wie den Teilnehmereinheiten TE, erreicht. Die Tokenwerte v von neu generierte Tokenreferenzen TR oder zu löschenden Tokenreferenzen TR haben direkten Einfluss auf eine Änderung des Gesamt-Tokenwerts, der in der Prüfeinheit 3 überwacht wird. Der Gesamt-Referenzwert wird entsprechend angepasst, wenn der Tokenherausgeber TH Token erst-registriert oder entregistriert.

Eine Registrieranfrage RA ist bevorzugt mit dem privaten Teil r signiert. Durch die Signatur kann eine syntaktische Echtheit des Kommandos durch den Empfänger (TRR oder TE) einfach geprüft werden. Diese Prüfung erfolgt bevorzugt in der Datenbank 1 oder der Verifizier-Einheit 2. Zudem kann eine Registeranfrage RA beispielsweise syntaktisch validiert werden durch Prüfen der Signatur und/oder der Tokenreferenz TR.

Auch wenn eine Signatur in einer Teilnehmereinheit TE geprüft werden kann, so wird damit nicht sichergestellt, dass keine Mehrfachausgabe des gleichen Tokens T versucht wurde. Daher ist das Registrieren im Tokenreferenz-Register TRR vorgesehen. Zudem wird durch die Teilnehmereinheiten TE eine sichere Hardwareplattform vorgehalten. Mit verfügbarer Verbindung zum Tokenreferenz-Register TRR werden die Tokenreferenzen TR übertragen und im Tokenreferenz-Register TRR kann der Mehrfachausgabe-Versuch entdeckt werden.

Wenn eine Tokenreferenz TR im Tokenreferenz-Register TRR noch nicht bekannt ist, wird sie hinzugefügt (gespeichert).

In dem Tokenreferenz-Register TRR kann zudem auch eine Archivierungseinheit 5 vorhanden sein. In dieser Archivierungseinheit 5 werden verarbeitete Registrieranfragen RA und/oder verarbeitete Folgen von Registrierungsanfragen $RA_F$ abgespeichert. Nähere Ausführungen zur Archivierungseinheit werden in Fig. 9 gemacht.

Das Tokenreferenz-Register TRR, insbesondere die Verifiziereinheit 2 des TRR, empfängt und verarbeitet eine Registrieranfrage RA einer Teilnehmereinheit und/oder empfängt eine Folge von Registrieranfragen $RA_F$ als Folge und verarbeitet diese Folge $RA_F$.

In Fig. 3a ist eine Übersicht von Kommandos CO gezeigt, die an einem Token T vorgenommen werden können. Diese Kommandos CO können Modifikationen an einem vorhandenen Token T sein, beispielsweise "Umschalten (=Switch)", "Aufteilen (=Split)" oder "Verbinden (=Merge)". Die Kommandos CO können auch das Erzeugen (=Create) eines Tokens T oder das Löschen (Destroy) vorhandenen Token T betreffen. In Fig. 3a sind beispielhaft Kommandocodierungen angegeben (0x01 bis 0x05), die sodann Teil einer Registrieranfrage RA sein können.

In Fig. 3b ist eine Übersicht von Kommandos CO und deren signierte Registrieranfrage-Syntax RA gezeigt. Dabei werden pro Kommando CO Eingangs-Token T und Eingangs-Tokenreferenzen TR "verbraucht". Dabei werden pro Kommando CO Ausgangs-Token T Ausgangs-Tokenreferenzen TR "generiert".

Ein Kommando CO (Registrierungsanfrage RA) hat die grundlegende Struktur aus den folgenden drei Elementen: Kommandotyp, Eingangs-Tokenreferenz(en), Ausgangs-Tokenreferenz(en).

Jedes Kommando CA hat eine charakteristische Anzahl von Eingangs-Tokenreferenz(en) ("Eingänge") und Ausgangs-Tokenreferenz(en) ("Ausgänge"), die in den Figuren 4 bis 8 näher erläutert und dargestellt sind.

Zu beachten ist, dass für die Kommandos CO "Aufteilen", "Umschalten" und "Verbinden" die Differenz der Tokenwerte v aller beteiligten Token T bzw. Tokenreferenzen TR den Betrag "null" ergeben muss. Mit anderen Worten, diese Kommandos CO "Aufteilen", "Umschalten" und "Verbinden" erzeugen keine Tokenwerte v und vernichten keine Tokenwerte v. Dies kann am Kommandotyp CO selbst oder auch von der Prüfeinheit 3 des Tokenreferenz-Register TRR nachgeprüft werden und ist ein Prüfkriterium für eine Registeranfrage RA.

Zu beachten ist auch, dass nur für die Kommandos CO "Erzeugen" und "Löschen" eine Differenz der Tokenwerte v des beteiligten Tokens T bzw. Tokenreferenzen TR erlaubt ist, aber nur in Höhe des Tokenwerts v des Tokens T und nicht darüber hinaus.

Jede Registrieranfrage RA kann signiert werden, um prüfen zu können, dass der Sender der Tokenreferenz TR auch im Besitz des dazugehörigen Tokens T ist. Als Signatur kann ein ECDSA-Schema angewendet werden. Die Registrieranfrage RA wird bevorzugt mit dem privaten Teil r des Tokens T signiert.

Für signierte Registrieranfragen $RA_{sig}$ der Kommandotypen CO "Erzeugen" und "Löschen" wird eine weitere Signatur $Sig_{TH}$ eines Tokenherausgebers TH verlangt, um sicherzustellen, dass diese Kommandos von einer privilegierten Einheit des Transaktionssystems TS generiert worden sind.

In Fig. 4 ist ein Ausführungsbeispiel eines Ablaufdiagramms eines erfindungsgemäßen Verfahrens zum Erstellen eines Tokens T und das Registrieren im TRR gezeigt. Zudem ist die signierte Registrieranfrage $RA_{sig}$ und die Kommandostruktur sowohl aus Sicht der TE-Schicht als auch der TR-Schicht tabellarisch dargestellt.

Beim Erstellen gibt es keinen Eingangsparameter in der TE-Schicht. In einer privilegierten Einheit, hier dem Tokenherausgeber TH, wird eine Zufallszahl r generiert. Auf Basis von der Zufallszahl r wird ein öffentlicher Teil R errechnet, wie es oben beschrieben wurde. Somit kann im Tokenherausgeber TH eine Tokenreferenz TR ausgehend vom Tokenwert v und dem öffentlichen Teil R durch Konkatenation von v und R gebildet werden.

Eine Registrieranfrage RA bestehend aus dem Kommando "CREATE" bzw. dem Kommandocode gemäß Fig. 3a und der erzeugten Tokenreferenz TR wird im Tokenherausgeber TH signiert. Dazu wird der private Schlüssel pKey des Tokenherausgebers TH verwendet.

In der TE-Schicht wird der Token T an die TE1 ausgegeben. In der TRR-Schicht wird die signierte Registrierungsanfrage $RA_{sig}$ an das TRR ausgegeben.

Im Tokenreferenz-Register TRR wird die Signatur der Registrieranfrage RA mit dem öffentlichen Schlüssel PKey der Herausgeberinstanz TH geprüft. Dieser öffentliche Schlüssel $PKey_{TH}$ ist transaktionssystemweit bekannt oder wurde dem Tokenreferenz-Register TRR im Vorfeld zur Verfügung gestellt. Ist die Signaturprüfung erfolgreich, dann wird die Tokenreferenz TR in das Tokenreferenz-Register TRR eingetragen.

In einer Ausgestaltung wird der Gesamt-Tokenwert des Transaktionssystems TS in der Prüfeinheit 3 des Tokenreferenz-Register TRR um den Tokenwert v durch die Neuregistriereinheit 4 des Tokenreferenz-Register TRR erhöht.

In Fig. 5 ist ein Ausführungsbeispiel eines Ablaufdiagrams eines erfindungsgemäßen Verfahrens zum Löschen eines Tokens T und Registrieren des gelöschten T im TRR gezeigt. Zudem sind die dazu benötigten signierten Registrieranfrage $RA_{sig\_TH}$ und $RA_{sig\_T}$ sowie die Kommandostruktur sowohl aus Sicht der TE-Schicht als auch der TR-Schicht tabellarisch dargestellt.

Beim Löschen wird als Eingangsparameter in der TE-Schicht der zu löschende Token T verwendet und in der TRR-Schicht die zu löschende Tokenreferenz TRR und zwei signierte Registrieranfrage $RA_{sig\_TH}$ und $RA_{sig\_T}$ verwendet.

Die Registrieranfrage RA bestehend aus dem Kommando "DESTROY" und der zu löschenden Tokenreferenz TR wird einmal mit dem privaten Schlüssel pKey des Tokenherausgebers TH signiert.

Eine weitere Registrieranfrage RA bestehend aus dem Kommando "DESTROY" und der zu löschenden Tokenreferenz TR wird zudem mit dem privaten Teil r des Tokens T signiert.

Beide signierte Registrieranfragen werden an das Tokenreferenz-Register TRR versendet. Im Tokenreferenz-Register TRR wird die Signatur mit dem öffentlichen Schlüssel der Herausgeberinstanz TH geprüft. Dieser öffentliche Schlüssel ist transaktionssystemweit bekannt oder wurde dem Tokenreferenz-Register TRR im Vorfeld zur Verfügung gestellt. Zudem wird die Signatur der weiteren Registrieranfrage RA mit dem öffentlichen Teil der Tokenreferenz TR geprüft. Sind beide Signaturprüfungen erfolgreich, dann wird die Tokenreferenz TR in dem TRR gelöscht oder als gelöscht markiert.

In einer Ausgestaltung wird der Gesamt-Tokenwert des Transaktionssystems TS in der Prüfeinheit 3 des Tokenreferenz-Register TRR um den Tokenwert v durch die Neuregistriereinheit 4 des Tokenreferenz-Register TRR verringert.

Das Tokenreferenz-Register TRR oder der Tokenherausgeber TH veranlassen zudem das Löschen des Tokens T in der Teilnehmereinheit TE1.

In Fig. 6 ist ein Ausführungsbeispiel eines Ablaufdiagrams eines erfindungsgemäßen Verfahrens zum Aufteilen eines Tokens $T_a$ und Registrieren der aufgeteilten Token $T_b$ $T_c$ im Tokenreferenz-Register TRR gezeigt. Zudem ist die dazu benötigte signierte Registrieranfrage $RA_{sig\_Ta}$ sowie die Kommandostruktur sowohl aus Sicht der TE-Schicht als auch der TR-Schicht tabellarisch dargestellt.

In der TE-Schicht wird durch die TE1 eine erste Zufallszahl $r_b$ und eine zweite Zufallszahl $r_c$ erzeugt. Basierend darauf wird dann jeweils ein öffentlicher Teil $R_b$ und $R_c$ erzeugt. Als Eingangsparameter steht in der TE-Schicht der aufzuteilende Token $T_a$ zur Verfügung. Es erfolgt in der TE-Schicht eine Aufteilung des Tokenwerts $v_a$ in einen ersten Tokenteilwert $v_b$ und einen zweiten Tokenteilwert $v_c$. Die Summe aus Tokenteilwert $v_b$ und Tokenteilwert $v_c$ muss den Tokenwert $v_a$ ergeben. Damit wird sichergestellt, dass kein neuer Tokenwert v erzeugt wird oder ein Tokenwert v vernichtet wird.

Sodann werden von der TE1 die Tokenreferenzen $TR_b$ und $TR_c$ erzeugt. Die Registrieranfrage RA enthält sodann das Kommando "SPLIT" bzw. den dafür in Fig. 3a gezeigten Kommandocode, die Eingangs-Tokenreferenz $TR_a$ und die Ausgangs-Tokenreferenzen $TR_b$ und $TR_c$. Diese Registrieranfrage RA wird mit der Zufallszahl $r_a$ des Tokens $T_a$ signiert. Die signierte Registrieranfrage $RA_{sig\_Ta}$ wird vom TE1 an das Tokenreferenz-Register TRR gesendet. Dort wird die Signatur geprüft und die Summe von $v_b$ und $v_c$ gebildet und mit dem Tokenwert $v_a$ verglichen. Wenn $v_a = v_b + v_c$ gilt und die Signaturprüfung erfolgreich ist, dann wird die Tokenreferenz $TR_a$ in dem Tokenreferenz-Register TRR gelöscht oder als gelöscht markiert und die Tokenreferenzen $TR_b$ und $TR_c$ in das Tokenreferenz-Register TRR eingetragen.

In einer Ausgestaltung wird im Tokenreferenz-Register in der Verifiziereinheit 2 die Tokenwertedifferenz der Eingangs-Tokenreferenz $TR_a$ und der Ausgangs-Tokenreferenzen $TR_b$ und $TR_c$ gebildet und geprüft, diese Differenz null ist. Ist die Differenz nicht null, so wurde in unerlaubter Weise ein Tokenwert v generiert oder vernichtet. Zudem kann auch der Gesamt-Tokenwert des Transaktionssystems TS in der Prüfeinheit 3 des Tokenreferenz-Register TRR vor oder nach der Registrierung der Tokenreferenzen $TR_b$ und $TR_c$ geprüft werden. Der Gesamt-Tokenwert v in der Prüfeinheit 3 darf sich nicht verändert haben und muss dem Wert vor der Verarbeitung der Registrieranfrage im Tokenreferenz-Register TRR entsprechen.

Der aufgeteilte Token $T_b$ (oder $T_c$) (der zwischenzeitlich von TE1 an TE2 übertragen wurde) kann nun von der Teilnehmereinheit TE2 im TRR auf Gültigkeit geprüft werden.

Die Registrieranfrage $RA_{sigTa}$ kann von dem Tokenreferenz-Register TRR durch eine Registrierungsbestätigung RB bestätigt werden.

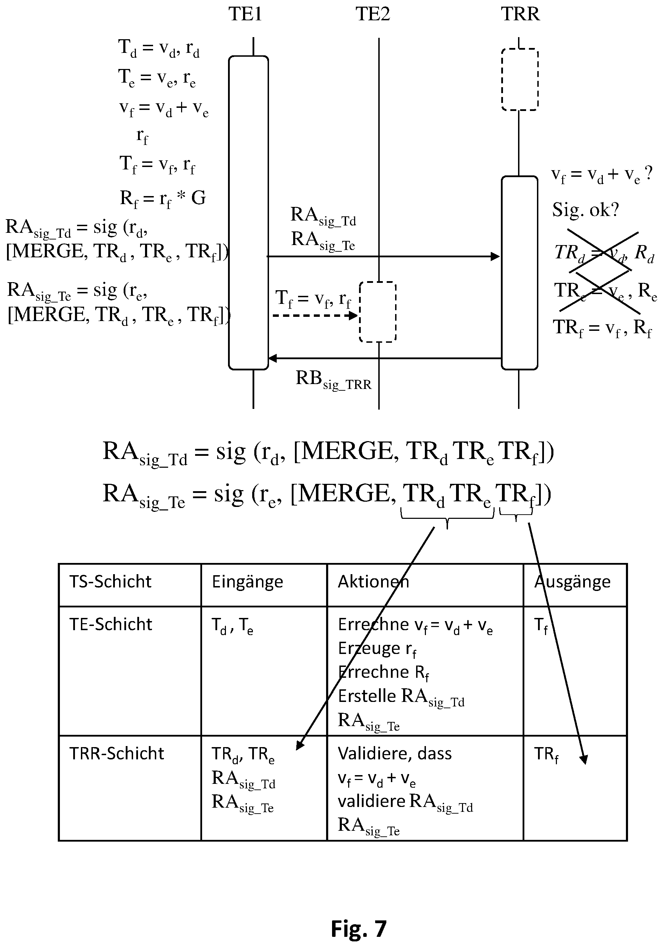

In Fig. 7 ist ein Ausführungsbeispiel eines Ablaufdiagrams eines erfindungsgemäßen Verfahrens zum Verbinden eines Tokens $T_d$ mit einem Token $T_e$ und Registrieren des verbundenen Tokens $T_f$ im TRR gezeigt. Zudem sind die dazu benötigten signierten Registrieranfragen $RA_{sig\_Td}$ und $RA_{sig\_Te}$ sowie die Kommandostruktur sowohl aus Sicht der TE-Schicht als auch der TR-Schicht tabellarisch dargestellt.

Dabei wird in einer TE1 der TE-Schicht eine Zufallszahl $r_f$ erzeugt. Basierend darauf wird dann ein öffentlicher Teil $R_f$ erzeugt. Zudem erfolgt das Bilden einer Summe aus den Tokenwerten $v_d$ und $v_e$ zum Tokenwert $v_f$ basierend auf den Eingangs-Token $T_d$ und $T_e$.

Sodann wird die Ausgangs-Tokenreferenz $TR_f$ erzeugt. Eine Registrieranfrage RA enthält sodann das Kommando "MERGE" bzw. den in Fig. 3a gelisteten Kommandocode, die zwei Eingangs-Tokenreferenzen $TR_d$ und $TR_e$ sowie die Ausgangs-Tokenreferenz $TR_f$. Diese Registrieranfrage RA wird einmal mit der Zufallszahl $r_d$ des Tokens $T_d$ signiert, um eine erste signierte Registrieranfrage $RA_{sig\_Td}$ zu erhalten. Diese Registrieranfrage wird zudem mit der Zufallszahl $r_e$ des Tokens $T_e$ signiert, um eine zweite signierte Registrieranfrage $RA_{sig\_Te}$ zu erhalten. Beide signierte Registrieranfragen $RA_{sig\_Td}$ und $RA_{sig\_Te}$ werden von der Teilnehmereinheit TE1 an das Tokenreferenz-Register TRR gesendet. Dort werden jeweils die Signaturen der Registrieranfragen $RA_{sig\_Td}$ und $RA_{sig\_Te}$ geprüft. Zudem wird die Summe von den Tokenwerten $v_d$ und $v_e$ gebildet und mit dem Tokenwert $v_f$ verglichen. Wenn $v_f = v_d + v_e$ gilt und beide Signaturprüfungen erfolgreich sind, dann werden $TR_d$ und $TR_e$ in dem Tokenreferenz-Register TRR gelöscht oder als gelöscht markiert und die Tokenreferenz $TR_f$ in das Tokenreferenz-Register TRR eingetragen. Der verbundene Token $T_f$ (der zwischenzeitlich von TE1 an TE2 übertragen wurde) kann nun von der Teilnehmereinheit TE2 im TRR auf Gültigkeit geprüft werden.

In Fig. 8 ist ein Ausführungsbeispiel eines Ablaufdiagrams eines erfindungsgemäßen Verfahrens zum Umschalten eines Tokens $T_g$ auf einen Token $T_h$ und Registrieren des umgeschalteten Tokens $T_h$ im Tokenreferenz-Register TRR gezeigt. Zudem ist die dazu benötigte signierte Registrieranfragen $RA_{sig\_Tg}$ sowie die Kommandostruktur sowohl aus Sicht der TE-Schicht als auch der TR-Schicht tabellarisch dargestellt.

Dabei wird in einer TE1 eine Zufallszahl $r_h$ erzeugt. Basierend darauf wird dann ein öffentlicher Teil $R_h$ erzeugt. Zudem wird der zum Tokenwert $v_g$ des Eingangs-Token $T_g$ identische Tokenwert $v_h$ gebildet.

Sodann wird die Tokenreferenz $TR_h$ erzeugt. Eine Registrieranfrage RA enthält sodann das Kommando "SWITCH" oder einen entsprechenden Kommandocode gemäß Fig. 3a, die Eingangs-Tokenreferenz $TR_g$ und den gebildeten öffentlichen Teil $R_h$ (bzw. die Ausgangs-Tokenreferenz $TR_h$). Diese Registrieranfrage RA wird mit der Zufallszahl $r_g$ des Tokens $T_g$ signiert. Die signierte Registrieranfrage $RA_{sig\_Tg}$ wird von der Teilnehmereinheit TE1 an das Tokenreferenz-Register TRR gesendet. Dort wird die Signatur geprüft. Zudem wird der Tokenwert $v_g$ mit dem Tokenwert $v_h$ verglichen. Wenn $v_g = v_h$ gilt und die Signaturprüfung erfolgreich ist, dann wird die Tokenreferenz $TR_g$ in dem Tokenreferenz-Register TRR gelöscht oder als gelöscht markiert und die Tokenreferenz $TR_h$ in das Tokenreferenz-Register TRR eingetragen.

In Fig. 9 ist eine weitere Ausgestaltung eines Tokenreferenz-Registers TRR eines Transaktionssystems TS gezeigt. Optionale Einheiten sind jeweils mit gestrichelten Linien dargestellt.

Hierbei ist angedeutet, dass mehrere Speichereinheiten 1 im Tokenreferenz-Register TRR vorgehalten sein können. Ein Abspeichern einer Vielzahl von Tokenreferenzen TR im Tokenreferenzregister TRR kann somit beschleunigt werden. Es ist zudem angedeutet, dass mehrere Verifiziereinheiten 2 im Tokenreferenz-Register TRR vorgehalten sein können. Die Verifiziereinheiten 2 können eine Verifizierung von Registrieranfragen RA beschleunigen. Insbesondere können Verifiziereinheiten 2 und/oder Speichereinheiten 1 parallel arbeiten, beispielsweise Registrieranfragen für unterschiedliche Tokenreferenzen parallel bearbeiten.

Zudem ist eine weitere Teilnehmereinheit $TE_B$, beispielsweise einer Bank oder eines Finanzdienstleisters, dargestellt. Der Tokenherausgeber TH kann Token direkt an die Teilnehmereinheiten TE ausgeben oder indirekt über die weitere Teilnehmereinheit $TE_B$ an die Teilnehmereinheiten TE ausgeben. Diese kann als Schnittstelle zwischen dem Transaktionssystem TS und einem Buchgeldsystem (Kreditvergabe, Kontenmanagement) funktionieren. Die weitere Teilnehmereinheit $TE_B$ ermöglicht es Teilnehmereinheiten TE auch, Token T des Transaktionssystems TS in ein anderes Transaktionssystem zu überführen. Diese Überführung ist bidirektional und erfolgt optional unter Verwendung des Tokenherausgebers TH. Der Tokenherausgeber TH ist für die Generierung von Token T und auch das Löschen von Token T allein verantwortlich.

Zudem zeigt Fig. 9 eine optionale Registrierungsanfrage-Einheit RAE, die von einer Teilnehmereinheit TE1 eine Folge von Registrierungsanfragen $RA_F$ erhält. Die Registrierungsanfrage-Einheit RAE kann die Folge $RA_F$ beispielsweise insgesamt oder nacheinander in einzelnen RA an das TRR weiter leiten. Lediglich alternativ - nicht entsprechend der vorliegenden Lösung - könnte eine RAE auch nur die einzelnen RA an das TRR senden, so dass das TRR keine Kenntnis über das Vorliegen der Folge $RA_F$ hätte.

Es ist von Vorteil, wenn pro Teilnehmereinheit TE (hier als ein sicheres Element, bspw. Smart Card oder TEE) nur ein Token T verwendet wird. Die Teilnehmereinheit TE kann aber auch mehrere Token enthalten. Das bedeutet, dass das TE einen erhaltenen Token T mit dem im Tokenspeicher abgelegten Token T verbindet (MERGE). Das bedeutet auch, dass das TE einen zu versendenden Token T von dem im Tokenspeicher abgelegten Token T abteilt (SPLIT). Diese Modifikationen am Token T können zunächst ohne Registrieranfrage RA durchgeführt werden und der Token T kann nach einer Modifikation sofort weitergegeben werden. Es kann also zu einer Folge von Modifikationen am Token T kommen, die dem TRR nicht bekannt sind. Typischerweise besteht die Folge von Registrieranfragen RA aus einer Kombination von SPLIT und MERGE Modifikationen. Jede dieser Modifikationen wird auch als "Proof" (siehe oben zur Fig. 1) bzw. signierte Registrieranfrage $RA_{sig}$ mit dem Token T abgespeichert. Damit entsteht in der TE eine Folge von Registrieranfragen $RA_F$.

In den vorangegangenen Figuren 1 bis 8 wurde eine Registrierungsanfrage RA aus einer Folge von Registrierungsanfragen $RA_F$ gesendet. Dabei könnte das TRR zunächst in Unkenntnis darüber bleiben, ob es sich bei der RA um eine RA aus einer Folge $RA_F$ von RA handelt oder nicht.

Von Vorteil ist nun, wenn die TE die gesamte Folge $RA_F$ von Registrierungsanfrage RA dem TRR als Folge bereitstellt. Das TRR kann die Folge $RA_F$ somit auch als Folge bearbeiten. Die TE kann nun insbesondere nur eine Registrierantwort (auch Registrierbestätigung genannt) RB für die gesamte Folge $RA_F$ von der TRR erhalten.

Zwischen dem TE und dem TRR kann ein Endgerät (nicht gezeigt in Fig. 9) vorgesehen sein, in das das TE betriebsbereit eingebracht ist. Das Endgerät kann auf das TE zugreifen, beispielsweise mittels eines elektronischen Wallets. Das Endgerät vermittelt die Registrieranfragen RA an das TRR. Das Endgerät erhält dazu die Folge $RA_F$. Alternativ oder zusätzlich kann zwischen dem TE und dem TRR auch eine Registrieranfrage-Einheit RAE als Vermittlungsinstanz vorgesehen sein, siehe Fig. 9. Die RAE erhält sodann die Folge $RA_F$ vom TE oder dem Endgerät.

Gemäß Fig. 9 erhält die RAE die Folge $RA_F$ und sendet einzelne RA aus der Folge $RA_F$ als Teil der Folge an das TRR. Die Registrierung der einzelnen RA erfolgt nach dem gleichen Schema, wie in den Fig. 1 bis 8 gezeigt und es wird darauf explizit Bezug genommen. Alternativ oder zusätzlich erhält das TRR die gesamte Folge $RA_F$ auf einmal, bevor das Verifizieren durchgeführt wird, beispielsweise in einer API-Anfrage. Das TRR arbeitet jede RA dieser $RA_F$ dann einzeln ab.

Das Endgerät (nicht gezeigt in Fig. 9) oder die RAE versucht, die gesamte Folge $RA_F$ an das TRR zu übermitteln. Das bedeutet, dass das Endgerät oder die RAE nur eine Protokollübersetzung, beispielsweise von APDU zwischen Endgerät/RAE und TE zu HTTP(S) vornimmt. Die $RA_F$ werden weder vom Endgerät noch von der RAE ausgewertet oder interpretiert. Die Reihenfolge der RA in der Folge $RA_F$ wird durch das Endgerät oder die RAE nicht verändert. Die Registrierbestätigung RB des TRR wird dann vom Endgerät und/oder der RAE an das TE übertragen. Jede RA (wie oben in den Figs. 1 bis 8 dargestellt ist) ist signiert mit einem privaten Teil r (der Zufallszahl r) eines tokenindividuellen Schlüsselpaars. Ein entsprechender Proof (also die jeweilige RA) wird in der TE (im Tokenspeicher) abgelegt.

Die Verifiziereinheit 2 des TR prüft nacheinander die Gültigkeit aller einzelnen RA der Folge $RA_F$ (auch als payload bezeichnet) und übersetzt das Endergebnis für alle RA in eine einzige RB um. Diese RB hat eine Registrierstatusinformation, beispielsweise "*200*", wenn alle RA der Folge $RA_F$ erfolgreich verifiziert werden konnten und beispielsweise *"400",* wenn nicht alle RA der Folge $RA_F$ erfolgreich verifiziert werden konnten. Die RB wird an das TE (ggf. über die RAE oder das Endgerät) zurückgesendet. Die RB kann mit einem privaten Schlüssel $pKey_{TRR}$ eines Schlüsselpaars der Verifiziereinheit 2 signiert werden. Die RB kann zudem eine $RA_{sig}$ umfassen, beispielsweise alle RA der Folge $RA_F$ oder nur die letzte RA der Folge $RA_F$.

Die RAE oder das Endgerät erhält eine RB für die gesamte Folge $RA_F$. Diese RB wird an das TE gesendet, damit dieses TE die Gültigkeit der RB prüfen und bei Bestätigung der Gültigkeit, die Folge $RA_F$ aus dem Tokenspeicher entfernen kann (= Löschen aller Proofs dieses Token T).

Wenn alle RA der Folge $RA_F$ erfolgreich verifiziert wurden, verwendet die Verifiziereinheit 2 des TRR (oder eine äquivalente Einheit des TRR) nur die $RA_{sig\_T}$ der chronologisch letzten RA der Folge Folge in ihrer RB an das TE.

Wenn eine der RA der Folge $RA_F$ nicht verifiziert werden konnte, verwendet die Verifiziereinheit 2 des TRR (oder eine äquivalente Einheit des TRR) nur die $RA_{sig\_T}$ der ersten nicht-verifizierbaren RA der Folge $RA_F$ in ihrer RB an das TE (ein TR zu dem kein T zuordbar ist).

Die TE prüft die Registrierinformation des RB und verhält sich unterschiedlich in Abhängigkeit von erfolgreicher Verifizierung aller RA der Folge $RA_F$ (bspw. Status "200") oder fehlgeschlagener Verifizierung einer RA in der Folge $RA_F$ (bspw. Status "400").

Bei einer erfolgreichen Verifizierung aller RA der Folge $RA_F$ (bspw. Status "200") wird folgender Algorithmus in der TE ausgelöst:

Schritt 1: Laden der chronologisch letzten RA der Folge $RA_F$ aus dem Tokenspeicher;

Schritt 2: Prüfen der Signatur $RA_{sig\_T}$ aus der RB mit dem öffentlichen Teil R. Wenn die Signatur $RA_{sig\_T}$ nicht prüfbar ist, weiter mit Schritt 6;

Schritt 3: Wenn $RA_{sig\_T}$ der RB verifizierbar ist, wird die Signatur der Verifiziereinheit 2 mit dem öffentlichen Teil $PKey_{TRR}$ des Schlüsselpaars der Verifiziereinheit 2 geprüft;

Schritt 4: Wenn die Signatur der Verifiziereinheit 2 verifizierbar ist, Löschen von allen RA der Folge $RA_F$ aus dem Tokenspeicher der TE. Wenn die chronologisch letzte RA erfolgreich verifiziert werden kann in der Verifiziereinheit 2, dann bedeutet dies, dass alle vorherigen RA der Folge $RA_F$ ebenfalls verifiziert worden sein müssen. Dies ergibt sich beispielsweise immer dann, wenn die TE immer (nur) einen Token T vorhält und mit Modifikationen (Split/Merge) weitere Tokenwerte v vom Tokenwert v des Token T subtrahiert oder addiert.

Schritt 5: Wenn die Signatur der Verifiziereinheit 2 nicht verifizierbar ist, wurde das Protokoll verletzt. Es wird von einer Man-in-the-Middle Attacke ausgegangen, die Registrieranfragen RA werden nicht aus dem Tokenspeicher der TE gelöscht.

Schritt 6: Wenn $RA_{sig\_T}$ von der RB nicht verifizierbar ist, wird die gesamte Folge iterativ geprüft, um die RA zu finden, für die die RA$_{sig\_T}$ aus der RB verifizierbar ist. Die Folge RA$_F$ kann in zwei Richtungen iteriert werden, entweder von der ältesten RA zur neuesten RA oder von der neuesten RA zur ältesten RA. Wenn eine übereinstimmende RA in der Folge RA$_F$ gefunden wurde, werden die Schritte 3 bis 5 ausgeführt.

Dieser Algorithmus wird nun anhand eines Beispiels erläutert, bei dem zwei Modifikationen an einem Token T durchgeführt werden:

Modifikation 1 (SPLIT, siehe auch Fig. 6): Der Tokenwert $v_a$ des Tokens $T_a$ wird von v = 100 in $v_b$ = 30 und in $v_c$ = 70 geteilt.

Modifikation 2 (MERGE, siehe auch Fig. 7): Der Tokenwert $v_b$ = 70 wird mit einem Tokenwert $v_d$ = 50 eines weiteren Tokens $T_d$ zu einem neuen Tokenwert $v_e$ = 120 verbunden.

Die entsprechenden RA für die beiden Modifikationen sind:

$$RA1 = [SPLIT, 100, 8, 30, 9, 70, 10]$$

$$RA2 = [MERGE, 70, 10, 50, 6, 120, 11]$$

Die TE berechnet (siehe auch Figuren 6 und 7) drei RA$_{sig\_T}$:

$$RA_{Sig1} = sig(r1, RA1)$$

$$RA_{Sig2A} = sig(r2, RA2)$$

$$RA_{Sig2B} = sig(r3, RA2)$$

RA$_{Sig2A}$ und RA$_{Sig2B}$ können gemeinsam übertragen werden oder bilden eine gemeinsame signierte RA. Das TRR prüft die Gültigkeit und bestätigt alle RA$_{Sig}$ (=Proofs), indem das TRR die folgende Antwort RB an das TE zurücksendet:

$$Status = 200, Sig2A, sig(pKey_{TRR}, [200, Sig2A, Sig2B])$$

Bei fehlgeschlagener Verifizierung einer RA in der Folge RA$_F$ (bspw. Status "400") wird folgender Algorithmus ausgeführt:

Schritt 1: Finden der chronologisch ältesten RA in der Folge RA$_F$, die mit der RA$_{sig\_T}$ der RB verifizierbar ist. Die Folge RA$_F$ kann in zwei Richtungen iteriert werden, entweder von der ältesten RA zur neuesten RA oder von der neuesten RA zur ältesten RA.

Schritt 2: Wenn die RA$_{sig\_T}$ der RB mit einer RA der Folge RA$_F$ verifizierbar ist, wird die Signatur der Verifiziereinheit 2 mit dem öffentlichen Teil PKey$_{TRR}$ des Schlüsselpaars der Verifiziereinheit 2 überprüft. Wenn die Signatur der Verifiziereinheit 2 nicht verifizierbar ist, wurde das Protokoll verletzt. Es wird von einer Man-in-the-Middle Attacke ausgegangen, die Registrieranfragen RA werden nicht aus dem Tokenspeicher der TE gelöscht.

Schritt 3: Wenn die Signatur der Verifiziereinheit 2 verifizierbar ist, werden keine RA (Proofs) gelöscht. Optional können fehlgeschlagene RA markiert werden oder die RB im Tokenspeicher der TE aufbewahrt werden, um die fehlgeschlagene RA leichter identifizieren zu können, wenn dies später angefordert wird.

Dieser Algorithmus wird nun ebenfalls anhand eines Beispiels erläutert. Es werden vier Modifikationen (SPLIT, MERGE, MERGE, SPLIT) an einem Token T durchgeführt werden:

Modifikation 1 (SPLIT, siehe auch Fig. 6): Der Tokenwert $v_a$ des Tokens $T_a$ wird von v = 100 in $v_b$ = 30 und in $v_c$ = 70 geteilt.

Modifikation 2 (MERGE, siehe auch Fig. 7): Der Tokenwert $v_b$ = 70 wird mit einem Tokenwert $v_d$ = 50 eines weiteren Tokens $T_d$ zu einem neuen Tokenwert $v_e = 120$ verbunden.

Modifikation 3 (MERGE, siehe auch Fig. 7): Der Tokenwert $v_e = 120$ wird mit einem Tokenwert $v_f = 40$ eines weiteren Tokens $T_f$ zu einem neuen Tokenwert $v_g = 160$ verbunden.

Modifikation 4 (SPLIT, siehe auch Fig. 6): Der Tokenwert $v_g = 160$ wird in $v_h = 100$ und in $v_i = 60$ geteilt.

Die entsprechenden RA für die vier Modifikationen sind:

$$RA1 = [SPLIT, 100, 8, 30, 9, 70, 10]$$

$$RA2 = [MERGE, 70, 10, 50, 6, 120, 11]$$

$$RA3 = [MERGE, 120, 11, 40, 5, 160, 13]$$

$$RA4 = [SPLIT, 160, 13, 60, 17, 100, 3]$$

Die TE berechnet (siehe auch Figuren 6 und 7) sechs $RA_{sig\_T}$:

$$RA_{Sig1} = sig(r1, RA1)$$

$$RA_{Sig2A} = sig(r2, RA2)$$

$$RA_{Sig2B} = sig(r3, RA2)$$

$$RA_{Sig3A} = sig(r4, RA3)$$

$$RA_{Sig3B} = sig(r4, RA3)$$

$$RA_{Sig4} = sig(r6, RA4)$$

$RA_{Sig2A}$ und $RA_{Sig2B}$ sowie $RA_{Sig3A}$ und $RA_{Sig3B}$ können gemeinsam übertragen werden oder bilden eine gemeinsame signierte RA. Das TRR prüft die Gültigkeit und stellt fest, dass RA3 ungültig ist und sendet die folgende Antwort RB an das TE zurücksendet:

$$Status = 400, Sig3A, sig(pKey_{TRR}, [400, Sig3A, Sig3B])$$

Dem TE ist nicht offensichtlich, dass, wenn das TRR eine RB mit dem Statuscode 400 sendet, der/die mit diesem RB verbundene(n) Token T gefälscht ist/sind. Es kann dabei vorkommen, dass alle RA innerhalb des TE gültig sind und echte/valide Token T beinhalten, aber trotzdem antwortet das TRR mit einer RB mit Status (Fehlercode) "400", auf eine Registrierungsanfrage der Folge $RA_F$. Der Status (Fehlercode) "400" führt zunächst einmal zu einem Abbruch der Registrierung der Folge $RA_F$. Dabei kann die Folge $RA_F$ bereits teilweise bearbeitet sein und die Speichereinheit 1 wurde teilweise bereits anhand Teilen der Folge $RA_F$ aktualisiert.

Dieser Abbruch oder diese nur teilweise Verarbeitung (Abarbeitung) kann aufgrund Netzwerk- oder Übertragungsfehlern erfolgen. Dabei kommt es beispielsweise während der Registrierung der Folge $RA_F$ der Registrieranfragen RA zu Problemen bei der Datenübertragung. In solchen Fällen antwortet das TRR mit einem Fehlerstatuscode (bspw. "400") in der RB, was nicht zwangsläufig bedeutet, dass die betreffenden Token T der TE gefälscht sind.

Ein Datenschutz- und Datenintegritätsmechanismus sieht nun erfindungsgemäß vor, jede Art von Manipulation von der Folge $RA_F$ während der Übertragung zur TRR zu erkennen. Dabei berechnet die TE vor dem Versenden der Folge $RA_F$ eine sichere Prüfsumme (bspw. Hashwert) über die Folge $RA_F$ (bevorzugt ohne die Signaturen) und bewahrt das Hash-/Prüfergebnis sicher im Tokenspeicher der TE auf. Dieses Hash-/Prüfsummen-Ergebnis ist vertraulich und wird nicht aus der TE heraus übertragen. Wenn die Verifiziereinheit 2 des TRR die Folge $RA_F$ registrieren möchte, berechnet die Verifiziereinheit 2 des TRR ebenfalls eine sichere Hash-/Prüfsumme über die Folge $RA_F$. Später wird die Verifiziereinheit 2 des TRR dieses Hash- /Prüfsummenergebnis nur im Falle von Fehlerszenarien (bspw. Fehlerstatuscode "400") in die RB einbeziehen. Im Fehlerfall hilft diese zusätzliche Hash-/Prüfsumme in dem RB bei der Analyse, ob der Fehler aufgrund von Übertragungsmanipulationen/-fehlern oder aufgrund eines gefälschten Tokens T aufgetreten ist. Die Verifiziereinheit 2 des TRR kann dieses Hash- /Prüfsummenergebnis optional auch im Falle von Erfolgsszenarien (bspw. Erfolgsstatuscode "200") in die RB (beispielsweise in die Signatur der RB) einbeziehen.

Der Hash/Prüfwert kann Teil der Signatur der Verifiziereinheit 2 sein. Wenn die TE nun die Signatur der Verifiziereinheit 2 prüft, muss die TE die gespeicherte Hash/Prüfsumme aus ihrem Tokenspeicher abrufen. Wenn die TE diese Zuordnung herstellen kann, bedeutet dies, dass die Folge $RA_F$ nicht (bspw. von einer Vermittlungsinstanz wie Endgerät, RAE oder einer Man-in-the-Middle-Instanz) manipuliert wurde.

Der Vorgang (Senden der Folge $RA_F$) wird dann einfach wiederholt werden, die entsprechenden RA mit Signaturen sind weiterhin im TE vorhanden. Die nur teilweise abgearbeitete Folge $RA_F$ kann dabei aus einer Archivierungseinheit 5 des TRR erhalten werden.

Dieser Abbruch oder diese nur teilweise Verarbeitung (Abarbeitung) kann zudem oder alternativ aufgrund eines Fehlverhaltens einer TE erfolgen. Beispielsweise hat eine böswillige TE absichtlich entweder die Reihenfolge der RA oder die Syntax der RA geändert, woraufhin das TRR die RA nicht verifizieren kann (Betrugsversuch). Beispielsweise wurde aufgrund eines fehlerhaften Verhaltens der TE oder aufgrund von Datenübertragungsfehlern oder aus anderen Gründen ungültige RA in der Folge $RA_F$ empfangen.

Wenn das TE einen RB mit dem Fehlerstatuscode 400 empfängt, identifiziert sie zunächst die fehlgeschlagene RA, siehe oben. Mit dem zugehörigen Hash/Prüfergebnis kann die TE zudem versuchen die Signatur der Verifiziereinheit 2 zu verifizieren.

Wenn die Signatur-Verifizierung fehlschlägt, dann wurden entweder die Daten der $RA_F$ während der Übertragung manipuliert oder die Antwort kam nicht von der Verifiziereinheit 2, aber jemand Drittes hat sich als Verifiziereinheit 2 ausgegeben, konnte aber keine gültige Signatur erzeugen. Die TE ignoriert dann den RB ohne Veränderungen im Tokenspeicher der TE.

Dieser Abbruch oder diese nur teilweise Verarbeitung (Abarbeitung) kann zudem oder alternativ aufgrund einer nicht-zuordbaren TR erfolgen. Beispielsweise gab es nie einen zuordbaren Token T (Betrugsversuch) oder der zuordbare Token T wurde bereits wieder modifiziert (split, merge, switch) und zu dieser Modifikation existiert eine Tokenreferenz TR im TRR oder der zuordbare Token T wurde bereits ausgegeben (illegaler Mehrfachausgabeversuch) oder der zuordbare Token T wurde gelöscht (Tokenwert v wurde eingelöst).

Für eine derartige Analyse ist eine ordnungsgemäße Untersuchung unter Verwendung der Archivierungseinheit 5 (und ggf. der Prüfeinheit 3 und/oder der Neuregistrierungseinheit 4) erforderlich.

In einem solchen Fall lagert das TRR die gesamte ausstehende $RA_F$ in die Archivierungseinheit 5 aus. Diese Anwendung kann aber auch in einem ATM-Terminal oder einem Web-Servern installiert werden. Sie ist darauf spezialisiert, Abrechnungsfehler zu analysieren, zu beheben und eine schwarze Liste mit gefälschten Token T (anhand der Tokenreferenzen TR) zu erstellen, die derzeit in der Offline-Welt im Umlauf sind. Ziel ist es, die TE und die Tokenspeicher zurückzusetzen (inklusive der Folge $RA_F$) und einen Ersatz-Token T auf die TE aufzuladen.

Das TE oder das RAE oder das Endgerät sendet die (gesamte) Folge $RA_F$ an die Archivierungseinheit 5 zusammen mit dem RB der Verifiziereinheit 2 des TRR. Die RB kann als Bestätigung dafür dienen, dass die Registrierung der Folge $RA_F$ abgebrochen wurde.

Die Archivierungseinheit 5 des TRR prüft jede RA der Folge $RA_F$ sowohl syntaktisch als auch semantisch mit Hilfe der Verifiziereinheit 2 des TRR. Dazu hat die Archivierungseinheit 5 einen Schreib-Lesezugriff auf die Speichereinheit des TRR. Die TR innerhalb einer RA werden einzeln geprüft.

Diejenigen TR, die der Verifiziereinheit 2 des TRR unbekannt sind, werden in einem aktiven Teil der Archiviereinheit 5 geführt. Auf diesen aktiven Teil der Archiviereinheit 5 hat auch die Verifiziereinheit 2 des TRR Zugriff.

Die Archiviereinheit 5 kann Transaktionsprotokollsätze von der TE anfordern, die den fehlgeschlagenen RA und den in der Archiviereinheit 5 aufgeführten RA oder TR entsprechen. Mit diesen Informationen der TE können bösartige TEs identifiziert und verfolgt werden.

Die Archivierungseinheit 5 kann Ersatztoken mit dem gesamten Tokenwert (einschließlich der Tokenwerte aus der Archivierungseinheit 5) oder nur aus den verifizierten RA und gültiger TR gemäß Speichereinheit 1 erstellen lassen, beispielsweise durch die Neuregistrierungseinheit 4.

Der Tokenspeicher der TE wird geleert und mit diesem Ersatztoken aufgeladen.

Die Wertneutralität der Registrieranfragen RA wird in der Verifziereinheit 2 geprüft. Sie prüft, für jede Registrieranfrage einer Teilnehmereinheit TE, ob die Summe der Eingangs-Tokenwerte gleich der Summe der Ausgangs-Tokenwerte ist. Die Prüfeinheit 3 prüft den Gesamtwert der gespeicherten Tokenwerte in der Speichereinheit 1, beispielsweise vor oder nach der Bearbeitung einer Folge $RA_F$ und/oder zu ausgewählten Zeitpunkten (periodisch oder quasizufällig). Die Prüfeinheit 3 vergleicht den aktuell gespeicherten Gesamt-Tokenwert mit einem Referenzwert. Der Referenzwert wird angepasst, wenn der Tokenherausgeber TH über seine Schnittstelle, die Neuregistriereinheit 4, Token löscht oder erstregistriert.

BEZUGSZEICHENLISTE

CO Kommando(typ)
$PKey_{TH}$ öffentlicher Teil des Tokenherausgeber-Schlüsselpaars
$pKey_{TH}$ privater Teil des Tokenherausgeber-Schlüsselpaars
$PKey_{TRR}$ öffentlicher Teil des Verifiziereinheiten-Schlüsselpaars
$pKey_{TRR}$ privater Teil des Verifiziereinheiten-Schlüsselpaars
R öffentlicher Teil des tokenindividuellen Schlüsselpaars
r privater Teil des tokenindividuellen Schlüsselpaars
$RA_F$ Folge von Registrieranfragen
$RA_L$ Letzte Registrieranfrage in der Folge von $RA_F$
RA Registrieranfrage
$RA_{sig\_T}$ Registrieranfrage signiert mit privatem Teil des tokenindividuellen Schlüsselpaars
$RA_{sig\_TH}$ Registrieranfrage signiert mit privatem Teil des Tokenherausgeber-Schlüsselpaars
RAE Registrieranfrage-Einheit
RB Registrierantwort, Registrierbestätigung
T Token
TE Teilnehmereinheit
$TE_B$ Teilnehmereinheit Bank
TE-Schicht Direkttransaktionsschicht
TRR-Schicht Registerschicht
TH Tokenherausgeber
TR Tokenreferenz
TRR Tokenreferenz-Register

1 Datenbank, Speichereinheit
2 Verifiziereinheit
3 Prüfeinheit
4 Neuregistriereinheit
5 Archivierungseinheit

TS Transaktionssystem
TW Tokenwert
a-h Indizes für verschiedene Token und Tokenreferenzen
$\Sigma$ Gesamt-Tokenwert des Transaktionssystems

**Patentansprüche**

**1.** Ein Verfahren zum Registrieren von Token (T) eines elektronischen Transaktionssystems (TS), welches sichere Elemente als Transaktionseinheiten (TE) umfasst, wobei jeder Token (T) des Transaktionssystems (TS) zumindest einen Tokenwert (v) und einen privaten Teil (r) eines tokenindividuellen Schlüsselpaars als Token-Elemente aufweist, mit den Verfahrensschritten:

- Empfangen von Registrieranfragen (RA) in einem Tokenreferenz-Register (TRR) des Transaktionssystems (TS), wobei die Registrieranfragen (RA) jeweils zumindest zwei Tokenreferenzen (TR) aufweisen, wobei mindestens eine Tokenreferenz (TR) einer ersten Registrieranfrage (RA) der Registrieranfragen (RA) und eine Tokenreferenz (TR) einer zweiten Registrieranfrage (RA) der Registrieranfragen (RA) gleich sind;
- Verifizieren, durch eine Verifiziereinheit (2) des Tokenreferenz-Registers (TRR), ob eine Tokenreferenz (TR) einer Registrieranfrage einem Token (T) des Transaktionssystems (TS) eindeutig zugeordnet werden kann, wobei dabei die Tokenreferenz (TR) darauf geprüft wird, ob sie im Tokenreferenz-Register (TRR) gespeichert ist oder war;
- Speichern zumindest einer anderen als der geprüften Tokenreferenz (TR) in der Speichereinheit (1) des Tokenreferenz-Registers (TRR) zum Registrieren des dieser Tokenreferenz (TR) eindeutig zugeordneten Tokens (T) im Transaktionssystem (TS), wenn im Verifizieren-Schritt festgestellt wird, dass der geprüften Tokenreferenz (TR) ein Token (T) des Transaktionssystems (TS) zugeordnet werden kann;

**dadurch gekennzeichnet, dass**

in dem Schritt des Empfangens die Registrieranfragen (RA) in dem Tokenreferenz-Register (TRR) als Folge $(RA_F)$ von Registrieranfragen (RA) empfangen werden, und

in den Schritten des Verifizierens und Speicherns die Registrieranfragen (RA) in dem Tokenreferenz-Register (TRR) als Folge $(RA_F)$ von Registrieranfragen (RA) verarbeitet werden.

2. Das Verfahren nach Anspruch 1, wobei jede Tokenreferenz (TR) außer der anderen Tokenreferenz (TR) aus der Folge $(RA_F)$ von Registrieranfragen (RA) eindeutig einem Token (T) im Transaktionssystem (TS) zugeordnet war oder ist und wobei insbesondere die Token (T) in einer Direkttransaktionsschicht (TE-Schicht) des Transaktionssystems (TS) direkt zwischen Teilnehmereinheiten (TE) des Transaktionssystems (TS) übertragen wurden und/oder von einer Teilnehmereinheit (TE) modifiziert wurden, ohne dass diese Token (T) im Transaktionssystem (TS) registriert wurden.

3. Das Verfahren nach Anspruch 1 oder 2, wobei

in dem Schritt des Empfangens die Registrieranfragen (RA) als Folge $(RA_F)$ von Registrieranfragen (RA) eines der sicheren Elemente (TE) empfangen werden; und/oder

mindestens die erste und die zweite Registrieranfragen (RA) der Folge einen bislang nicht registrierten, in der Teilnehmereinheit, insbesondere dem sicheren Element, vorliegenden Token enthalten.

4. Das Verfahren nach einem der Ansprüche 1 bis 3, wobei

die gesamte Folge $(RA_F)$ von Registrieranfragen (RA) in dem Tokenreferenz-Register (TRR) empfangen wird, bevor der Verifizieren-Schritt ausgeführt; und/oder ..der Schritt des Verifizierens für zumindest eine Tokenreferenz (TR) aus jeder Registrieranfrage (RA) ausgeführt wird; und/oder

der Schritt des Speicherns für die andere Tokenreferenz, insbesondere jeweils, ausgeführt wird, wenn die andere Tokenreferenz noch nicht gespeichert ist; und/oder

mindestens drei Registrieranfragen (RA) der Folge $(RA_F)$ eine Tokenreferenz (RA) umfassen, welche auch Tokenreferenz (TR) einer anderen Registrieranfrage (RA) der Folge $(RA_F)$ ist.

5. Das Verfahren nach einem der vorhergehenden Ansprüche, wobei die gesamte Folge $(RA_F)$ von Registrieranfragen (RA) von einer Teilnehmereinheit (TE) des Transaktionssystems (TS) an eine Registrieranfrage-Einheit des Transaktionssystems (TS) gesendet wird bevor der Verifizieren-Schritt ausgeführt wird und wobei das Tokenreferenz-Register (TRR) sequentiell jede Registrieranfrage (RA) aus der Folge von Registrieranfragen (RA) von der Registrieranfrage-Einheit empfängt und verifiziert, bevor die nächste Registrieranfrage (RA) aus der Folge $(RA_F)$ von Registrieranfragen (RA) empfangen und verifiziert wird.

6. Das Verfahren nach einem der vorhergehenden Ansprüche,

wobei in einer Archivierungseinheit (5) des Tokenreferenz-Registers (TRR) die Folge $(RA_F)$ von Registrieranfragen (RA) gespeichert wird; und/oder

wobei jede Registrieranfrage (RA) aus der Folge $(RA_F)$ von Registrieranfragen (RA) in einer Archivierungseinheit (5) des Tokenreferenz-Registers (TRR), bevorzugt in einem ersten Teil der Archivierungseinheit (5), gespeichert wird, wenn im Verifizieren-Schritt festgestellt wird, dass die geprüfte Tokenreferenz (TR) einer der Registrieranfragen (RA) der Folge $(RA_F)$ von Registrieranfragen (RA) keinem Token (T) des Transaktionssystems (TS) eindeutig zugeordnet werden kann,

wobei vorzugsweise eine Folge $(RA_F)$ von Registrieranfragen (RA) mit Tokenreferenzen (TR) in einem zweiten Teil der Archivierungseinheit (5), abgespeichert wird, wenn alle Tokenreferenzen (TR) der Folge $(RA_F)$ von Registrieranfragen (RA) jeweils einem Token (T) des Transaktionssystems (TS) eindeutig zugeordnet werden können.

7. Das Verfahren nach einem der vorhergehenden Ansprüche,

wobei die Tokenreferenzen (TR) der Folge von Registrieranfragen chronologisch rückwärts verifiziert werden, und/oder

wobei jede Tokenreferenz (TR) zumindest den Tokenwert (v) des Tokens (T) und einen öffentlichen Teil (R) des tokenindividuellen Schlüsselpaars als Tokenreferenz-Elemente aufweist, wobei der öffentliche Teil (R) des tokenindividuellen Schlüsselpaars durch Anwenden einer kryptografischen Einwegfunktion auf den privaten Teil (r) des tokenindividuellen Schlüsselpaars des Tokens (T) erhalten wurde; wobei vorzugsweise die Registrieranfrage (RA) mit dem privaten Teil (r) des tokenindividuellen Schlüsselpaars signiert ist, um eine Zuordnung von der Tokenreferenz (TR) zu dem Token (T) verifizieren zu können.

8. Das Verfahren nach einem der Ansprüche 1 bis 7, wobei jede Tokenreferenz (TR) erhalten wurde durch ein Maskieren des zugeordneten Tokens (T) durch Anwenden einer homomorphen Einwegfunktion (f(C)) auf den Token (T).

9. Das Verfahren nach einem der vorhergehenden Ansprüche mit den weiteren Verfahrensschritten:

   - Erstellen, von der Verifiziereinheit (2) des Tokenreferenz-Registers (TRR), einer Registrierantwort, wobei die Registrierantwort ein Ergebnis des Verifizieren-Schritts anzeigt;
   - Senden der Registrierantwort an eine die Registrieranfrage (RA) aus der Folge (RA$_F$) von Registrieranfragen (RA) versendende Teilnehmereinheit (TE) oder Registrieranfrage-Einheit des Transaktionssystems (TS), wobei bevorzugt die Teilnehmereinheit (TE) den Token (T) der zumindest einen Tokenreferenz (TR) der Folge (RA$_F$) der Registrieranfragen (RA) aufweist.

10. Das Verfahren nach einem der vorhergehenden Ansprüche, wobei

   - die Folge (RAF) von Registrieranfragen (RA) von einer Teilnehmereinheit (TE) bereitgestellt wird, und/oder
   - wobei jede Registrieranfrage (RA) der Folge (RA$_F$) zumindest eine Tokenreferenz (TR) als Ausgangs-Tokenreferenz sowie zumindest eine Eingangs-Tokenreferenz aufweist, und/oder
   - wobei die Registrieranfragen (RA) der Folge (RA$_F$) miteinander verknüpft sind, insbesondere jeweils eine Ausgangs-Tokenreferenz einer Registrierungsanfrage (RA) der Folge eine Eingangs-Tokenreferenz der nächsten Registrierungsanfrage (RA) der Folge bildet.

11. Ein Tokenreferenz-Register (TRR) für ein Transaktionssystem (TS), eingerichtet zum Durchführen der Verfahrensschritte nach einem der vorhergehenden Ansprüche, wobei das Tokenreferenz-Register (TRR) vorzugsweise aufweist:

   - zumindest eine Speichereinheit (1) zum Speichern von Tokenreferenzen (TR) zum Registrieren von Token (T) im Transaktionssystem (TS);
   - zumindest eine Verifiziereinheit (2) zum Verifizieren, ob eine Tokenreferenz (TR) einer empfangenen Registrieranfrage (RA) in dem Tokenreferenz-Register (TRR) gespeichert ist;
   - eine Archivierungseinheit (5) zum Speichern von Folgen von Registrieranfragen (RA); und
   - eine Neuregistriereinheit (4) zum Registrieren von von einem Tokenherausgeber (TH) neu generierten Token (T) oder von von einem Tokenherausgeber (TH) gelöschten Token (T).

12. Das Tokenreferenz-Register (TRR) nach Anspruch 11,

   wobei die Speichereinheit derart eingerichtet, dass:

   - eine Teilnehmereinheit (TE) oder eine Registrieranfrage-Einheit (RAE) nur Schreibzugriff - insbesondere mittels Registrieranfragen - auf die Speichereinheit (1) hat; und/oder
   - die Archivierungseinheit (5) und/oder die Verifiziereinheit (2) einen Schreib- und Lesezugriff auf die Speichereinheit (1) hat;

   und/oder
   wobei das Tokenreferenz-Register (TRR) eingerichtet ist zum Empfangen einer Vielzahl von Registrieranfragen, die parallel in einer Mehrzahl von Verifiziereinheiten darauf verifiziert werden, ob die in der jeweils empfangenen Registrieranfrage (RA) enthaltene zumindest eine Tokenreferenz (TR) einem Token (T) des Transaktionssystems (TS) eindeutig zugeordnet werden, wobei alle Registrieranfragen einer Folge von Registrieranfragen in jeweils der gleichen Verifiziereinheit sequenziell hintereinander verifiziert werden.

13. Ein sicheres Element als Teilnehmereinheit (TE) zur Nutzung in einem Transaktionssystem (TS) nach Anspruch 16 mit:

   - einer Schnittstelle, die eingerichtet ist zum:

o Übertragen von Token (T) zu einer anderen Teilnehmereinheit (TE);
o Übertragen, an ein Tokenreferenz-Register (TRR) oder eine Registrieranfrage-Einheit des Transaktionssystems (TS), einer Registrieranfrage (RA) umfassend zumindest eine erste und eine zweite Tokenreferenz (TR);

- einem Zugriffsmittel auf einen Tokenspeicher oder Tokenspeicher, wobei im Tokenspeicher zumindest ein Token (T) des sicheren Elements abgelegt ist; und
- einer Recheneinheit, eingerichtet zum:

o Anwenden einer kryptografischen Einwegfunktion auf einen privaten Teil (r) eines tokenindividuellen Schlüsselpaars eines Tokens (T) des Tokenspeichers zum Erhalten einer Tokenreferenz (TR); und
o Modifizieren von Token (T).

**14.** Das sichere Element als Teilnehmereinheit nach Anspruch 13,

wobei im Tokenspeicher eine Folge (RA$_F$) von Registrieranfragen (RA) abgelegt ist; und/oder
wobei Teilnehmereinheit eingerichtet ist, Registrieranfragen (RA) als Folge (RA$_F$) von Registrieranfragen (RA) an das Tokenreferenz-Register (TRR) zu senden; und/oder
wobei die Teilnehmereinheit eingerichtet ist, nur eine Registrierungsbestätigung für die Folge (RA$_F$) von Registrieranfragen (RA) von dem Tokenreferenz-Register (TRR) zu erhalten.

**15.** Das sichere Element als Teilnehmereinheit nach Anspruch 13 oder 14

wobei im Tokenspeicher nur ein Token gespeichert ist; und/oder
wobei zum Übertragen eines Tokens an eine andere Teilnehmereinheit der Token (T$_a$) aufgeteilt wird, wobei dazu eine Registrieranfrage (RA) erzeugt wird, wobei bevorzugt die Registrieranfrage (RA) eine Tokenreferenz (TR$_a$) des aufzuteilenden Tokens (T$_a$) und jeweils eine Tokenreferenz (TR$_b$, TR$_c$) der aufgeteilten Token (T$_b$, T$_c$) aufweist; und/oder
wobei beim Empfangen eines Tokens von einer anderen Teilnehmereinheit der empfangene Token (T$_e$) mit dem Token im Tokenspeicher verbunden wird, wobei dazu eine Registrieranfrage (RA) erzeugt wird, wobei bevorzugt die Registrieranfrage (RA) eine Tokenreferenz (TR$_f$) des verbundenen Tokens (T$_f$) und jeweils eine Tokenreferenz (TR$_d$, TR$_e$) der zu verbindenden Token (T$_d$, T$_e$) aufweist.

**16.** Ein Transaktionssystem (TS) aufweisend:

- eine Registerschicht (TRR-Schicht) mit einem Tokenreferenz-Register (TRR) gemäß Ansprüchen 11 bis 12 zum Registrieren von Tokenreferenzen (TR); und
- eine Direkttransaktionsschicht (TE-Schicht) mit einer Vielzahl von Teilnehmereinheiten (TE), die eingerichtet sind zum direkten Austausch von Token (T) untereinander;

wobei vorzugsweise die Registerschicht eine Registrieranfrage-Einheit umfasst, wobei die gesamte Folge von Registrieranfragen (RA) von einer Teilnehmereinheit (TE) des Transaktionssystems (TS) an die Registrieranfrage-Einheit des Transaktionssystems (TS) gesendet wird bevor der Verifizieren-Schritt ausgeführt wird und wobei das Tokenreferenz-Register (TRR) die Registrieranfrage (RA) aus der Folge von Registrieranfragen (RA) von der Registrieranfrage-Einheit empfängt.

**Claims**

**1.** Method for registering tokens (T) of an electronic transaction system (TS) that comprises secure elements as transaction units (TE), wherein each token (T) of the transaction system (TS) has at least one token value (v) and a private portion (r) of a token-specific key pair as token elements, having the method steps of:

- receiving registration requests (RA) in a token reference register (TRR) of the transaction system (TS), wherein the registration requests (RA) each have at least two token references (TR), at least one token reference (TR) of a first registration request (RA) of the registration requests (RA) and one token reference (TR) of a second registration request (RA) of the registration requests (RA) being identical;
- verifying, by way of a verification unit (2) of the token reference register (TRR), whether a token reference (TR) of a registration request can be uniquely assigned to a token (T) of the transaction system (TS), wherein the token reference (TR) is checked for whether it is or was stored in the token reference register (TRR);
- storing at least one token reference (TR) other than the checked token reference in the storage unit (1) of the token reference register (TRR) in order to register the token (T) uniquely assigned to this token reference (TR) in the transaction system (TS) if the verification step determines that a token (T) of the transaction system (TS) can be assigned to the checked token reference (TR);

**characterized in that**

the step of receiving receives the registration requests (RA) in the token reference register (TRR) as a sequence (RA$_F$) of registration requests (RA), and
the steps of verifying and storing process the registration requests (RA) in the token reference register (TRR) as a sequence (RA$_F$) of registration requests (RA).

2. Method according to Claim 1, wherein each token reference (TR) except the other token reference (TR) from the sequence (RA$_F$) of registration requests (RA) was or is uniquely assigned to a token (T) in the transaction system (TS) and wherein in particular the tokens (T) were transferred directly between subscriber units (TE) of the transaction system (TS) in a direct transaction layer (TE layer) of the transaction system (TS), and/or were modified by a subscriber unit (TE), without these tokens (T) having been registered in the transaction system (TS).

3. Method according to Claim 1 or 2, wherein

the step of receiving receives the registration requests (RA) as a sequence (RA$_F$) of registration requests (RA) of one of the secure elements (TE); and/or
at least the first and second registration requests (RA) in the sequence contain a previously unregistered token that is present in the subscriber unit, in particular the secure element.

4. Method according to one of Claims 1 to 3, wherein

the entire sequence (RA$_F$) of registration requests (RA) is received in the token reference register (TRR) before the verification step is performed; and/or
the step of verifying is performed for at least one token reference (TR) from each registration request (RA); and/or
the step of storing is performed for the other token reference, in particular in each case, if the other token reference is not yet stored; and/or
at least three registration requests (RA) in the sequence (RA$_F$) comprise a token reference (RA) that is also a token reference (TR) of another registration request (RA) in the sequence (RA$_F$).

5. Method according to one of the preceding claims, wherein the entire sequence (RA$_F$) of registration requests (RA) is transmitted from a subscriber unit (TE) of the transaction system (TS) to a registration request unit of the transaction system (TS) before the verification step is performed and wherein the token reference register (TRR) sequentially receives from the registration request unit, and verifies, each registration request (RA) from the sequence of registration requests (RA) before the next registration request (RA) from the sequence (RA$_F$) of registration requests (RA) is received and verified.

6. Method according to one of the preceding claims,

wherein the sequence (RA$_F$) of registration requests (RA) is stored in an archiving unit (5) of the token reference register (TRR); and/or
wherein each registration request (RA) from the sequence (RA$_F$) of registration requests (RA) is stored in an archiving unit (5) of the token reference register (TRR), preferably in a first part of the archiving unit (5), when the verification step determines that the checked token reference (TR) of one of the registration requests (RA) in the sequence (RA$_F$) of registration requests (RA) cannot be uniquely assigned to a token (T) of the transaction system (TS),
wherein a sequence (RA$_F$) of registration requests (RA) with token references (TR) is preferably stored in a second part of the archiving unit (5) if all token references (TR) of the sequence (RA$_F$) of registration requests (RA) can each be uniquely assigned to a token (T) of the transaction system (TS).

7. Method according to one of the preceding claims,

wherein the token references (TR) of the sequence of registration requests are verified chronologically backwards; and/or

wherein each token reference (TR) has at least the token value (v) of the token (T) and a public portion (R) of the token-specific key pair as token reference elements, wherein the public portion (R) of the token-specific key pair was obtained by applying a cryptographic one-way function to the private portion (r) of the token-specific key pair of the token (T); wherein the registration request (RA) is preferably signed with the private portion (r) of the token-specific key pair in order to be able to verify an assignment of the token reference (TR) to the token (T).

8. Method according to one of Claims 1 to 7, wherein each token reference (TR) was obtained by masking the assigned token (T) by applying a homomorphic one-way function (f(C)) to the token (T).

9. Method according to one of the preceding claims, having the further method steps of:

- creating, by way of the verification unit (2) of the token reference register (TRR), a registration response, wherein the registration response indicates a result of the verification step;
- transmitting the registration response to a subscriber unit (TE) or registration request unit of the transaction system (TS) that sends the registration request (RA) from the sequence (RA$_F$) of registration requests (RA), wherein the subscriber unit (TE) preferably has the token (T) of the at least one token reference (TR) of the sequence (RA$_F$) of registration requests (RA).

10. Method according to one of the preceding claims, wherein

- the sequence (RA$_F$) of registration requests (RA) is provided by a subscriber unit (TE), and/or
- wherein each registration request (RA) in the sequence (RA$_F$) has at least one token reference (TR) as an output token reference and at least one input token reference, and/or
- wherein the registration requests (RA) in the sequence (RA$_F$) are linked to each other, in particular a respective output token reference of a registration request (RA) in the sequence forms an input token reference of the next registration request (RA) in the sequence.

11. Token reference register (TRR) for a transaction system (TS), configured to perform the method steps according to one of the preceding claims, wherein the token reference register (TRR) preferably comprises:

- at least one storage unit (1) for storing token references (TR) in order to register tokens (T) in the transaction system (TS);
- at least one verification unit (2) for verifying whether a token reference (TR) of a received registration request (RA) is stored in the token reference register (TRR);
- an archiving unit (5) for storing sequences of registration requests (RA); and
- a re-registration unit (4) for registering tokens (T) re-generated by a token issuer (TH) or tokens (T) erased by a token issuer (TH).

12. Token reference register (TRR) according to Claim 11,

wherein the storage unit is configured such that:

- a subscriber unit (TE) or a registration request unit (RAE) has only write access - in particular by means of registration requests - to the storage unit (1); and/or
- the archiving unit (5) and/or the verification unit (2) have read and write access to the storage unit (1); and/or

wherein the token reference register (TRR) is configured to receive a multiplicity of registration requests, which are verified in parallel in a plurality of verification units to ascertain whether the at least one token reference (TR) contained in the respective received registration request (RA) is uniquely assigned to a token (T) of the transaction system (TS), wherein all registration requests in a sequence of registration requests are sequentially verified one after the other in the same verification unit in each case.

13. Secure element as a subscriber unit (TE) for use in a transaction system (TS) according to Claim 16, having:

- an interface configured to:

o transfer tokens (T) to another subscriber unit (TE);
o transfer, to a token reference register (TRR) or a registration request unit of the transaction system (TS), a registration request (RA) comprising at least one first and a second token reference (TR);

- an access means for accessing a token memory or token memories, wherein at least one token (T) of the secure element is stored in the token memory; and
- a computing unit configured to:

o apply a cryptographic one-way function to a private portion (r) of a token-specific key pair of a token (T) of the token memory in order to obtain a token reference (TR); and
o modify tokens (T).

14. Secure element as a subscriber unit according to Claim 13,

wherein a sequence ($RA_F$) of registration requests (RA) is stored in the token memory; and/or
wherein the subscriber unit is configured to transmit registration requests (RA) to the token reference register (TRR) as a sequence ($RA_F$) of registration requests (RA); and/or
wherein the subscriber unit is configured to obtain only one registration confirmation for the sequence ($RA_F$) of registration requests (RA) from the token reference register (TRR).

15. Secure element as a subscriber unit according to Claim 13 or 14,

wherein only one token is stored in the token memory; and/or
wherein to transfer a token to another subscriber unit the token ($T_a$) is split, wherein a registration request (RA) is generated for this purpose, wherein the registration request (RA) preferably has a token reference ($TR_a$) of the token ($T_a$) to be split and a token reference ($TR_b$, $TR_c$) of each of the split tokens ($T_b$, $T_c$); and/or
wherein when a token is received from another subscriber unit, the received token ($T_e$) is connected to the token in the token memory, wherein a registration request (RA) is generated for this purpose, wherein the registration request (RA) preferably has a token reference ($TR_f$) of the connected token ($T_f$) and a token reference ($TR_d$, $TR_e$) of each of the tokens ($T_d$, $T_e$) to be connected.

16. Transaction system (TS) comprising:

- a register layer (TRR layer) having a token reference register (TRR) according to Claims 11 to 12 for registering token references (TR); and
- a direct transaction layer (TE layer) having a multiplicity of subscriber units (TE) configured to directly exchange tokens (T) with each other;

wherein the register layer preferably comprises a registration request unit, wherein the entire sequence of registration requests (RA) is transmitted from a subscriber unit (TE) of the transaction system (TS) to the registration request unit of the transaction system (TS) before the verification step is performed, and wherein the token reference register (TRR) receives the registration request (RA) from the sequence of registration requests (RA) from the registration request unit.

**Revendications**

1. Procédé d'enregistrement de jetons (T) d'un système de transaction électronique (TS), lequel comprend des éléments de sécurité faisant office d'unités de transaction (TE), chaque jeton (T) du système de transaction (TS) ayant au moins une valeur de jeton (v) et une partie privée (r) d'une paire de clés individuelle pour le jeton en tant qu'éléments de jeton, comprenant les étapes suivantes :

- réception de demandes d'enregistrement (RA) dans un registre de référence de jeton (TRR) du système de transaction (TS), les demandes d'enregistrement (RA) comportant respectivement au moins deux références de jetons (TR), au moins une référence de jeton (TR) d'une première demande d'enregistrement (RA) parmi les demandes d'enregistrement (RA) et une référence de jeton (TR) d'une deuxième demande d'enregistrement (RA) parmi les demandes d'enregistrement (RA) étant identiques ;
- vérification, par une unité de vérification (2) du registre de référence de jeton (TRR), pour déterminer si une référence de jeton (TR) d'une demande d'enregistrement peut être associée de manière unique à un jeton (T) du système de transaction (TS), la référence de jeton (TR) étant alors vérifiée pour déterminer si elle est ou a été stockée dans le registre de référence de jeton (TRR) ;

- stockage d'au moins une référence de jeton autre que la référence de jeton vérifiée (TR) dans l'unité de mémoire (1) du registre de référence de jeton (TRR) pour enregistrer le jeton (T) associé de manière unique à cette référence de jeton (TR) dans le système de transaction (TS), lorsque l'étape de vérification détermine qu'un jeton (T) du système de transaction (TS) peut être associé à la référence de jeton vérifiée (TR) ;

**caractérisé en ce que**

lors de l'étape de réception, les demandes d'enregistrement (RA) sont reçues dans le registre de référence de jeton (TRR) sous forme de séquence ($RA_F$) de demandes d'enregistrement (RA), et

lors des étapes de vérification et de stockage, les demandes d'enregistrement (RA) sont traitées dans le registre de référence de jeton (TRR) sous forme de séquence ($RA_F$) de demandes d'enregistrement (RA).

2. Procédé selon la revendication 1, dans lequel chaque référence de jeton (TR), à l'exception de l'autre référence de jeton (TR) de la séquence ($RA_F$) de demandes d'enregistrement (RA), a été ou est associée de manière unique à un jeton (T) dans le système de transaction (TS), et dans lequel, en particulier, les jetons (T) ont été transférés directement entre des unités de participants (TE) du système de transaction (TS) dans une couche de transaction directe (couche TE) du système de transaction (TS) et/ou ont été modifiés par une unité de participant (TE) sans que ces jetons (T) aient été enregistrés dans le système de transaction (TS).

3. Procédé selon la revendication 1 ou 2, dans lequel lors de l'étape de réception, les demandes d'enregistrement (RA) sont reçues sous forme de séquence ($RA_F$) de demandes d'enregistrement (RA) de l'un des éléments de sécurité (TE) ; et/ou

au moins les première et deuxième demandes d'enregistrement (RA) de la séquence contiennent un jeton non encore enregistré, présent dans l'unité de participant, en particulier l'élément de sécurité.

4. Procédé selon l'une quelconque des revendications 1 à 3, dans lequel

la totalité de la séquence ($RA_F$) de demandes d'enregistrement (RA) est reçue dans le registre de référence de jeton (TRR) avant l'exécution de l'étape de vérification ; et/ou

l'étape de vérification est exécutée pour au moins une référence de jeton (TR) issue de chaque demande d'enregistrement (RA) ; et/ou

l'étape de stockage est exécutée pour l'autre référence de jeton, en particulier, respectivement, lorsque l'autre référence de jeton n'est pas encore stockée ; et/ou

au moins trois demandes d'enregistrement (RA) de la séquence ($RA_F$) comprennent une référence de jeton (RA) qui est également une référence de jeton (TR) d'une autre demande d'enregistrement (RA) de la séquence ($RA_F$).

5. Procédé selon l'une quelconque des revendications précédentes, dans lequel la totalité de la séquence ($RA_F$) de demandes d'enregistrement (RA) est envoyée par une unité de participant (TE) du système de transaction (TS) à une unité de demande d'enregistrement du système de transaction (TS) avant l'exécution de l'étape de vérification, et dans lequel le registre de référence de jeton (TRR) reçoit en provenance de l'unité de demande d'enregistrement et vérifie séquentiellement chaque demande d'enregistrement (RA) issue de la séquence de demandes d'enregistrement (RA) avant de recevoir et de vérifier la demande d'enregistrement suivante (RA) issue de la séquence ($RA_F$) de demandes d'enregistrement (RA).

6. Procédé selon l'une quelconque des revendications précédentes,

dans lequel la séquence ($RA_F$) de demandes d'enregistrement (RA) est stockée dans une unité d'archivage (5) du registre de référence de jeton (TRR) ; et/ou

dans lequel chaque demande d'enregistrement (RA) de la séquence ($RA_F$) de demandes d'enregistrement (RA) est stockée dans une unité d'archivage (5) du registre de référence de jeton (TRR), de préférence dans une première partie de l'unité d'archivage (5), lorsqu'il est établi à l'étape de vérification que la référence de jeton vérifiée (TR) de l'une des demandes d'enregistrement (RA) de la séquence ($RA_F$) de demandes d'enregistrement (RA) ne peut pas être associée de manière unique à un jeton (T) du système de transaction (TS), dans lequel une séquence ($RA_F$) de demandes d'enregistrement (RA) ayant des références de jetons (TR) est de préférence enregistrée dans une deuxième partie de l'unité d'archivage (5) lorsque toutes les références de jetons (TR) de la séquence (RA$_F$) de demandes d'enregistrement (RA) peuvent être associées de manière unique à un jeton (T) du système de transaction (TS).

7. Procédé selon l'une quelconque des revendications précédentes,

dans lequel les références de jetons (TR) de la séquence de demandes d'enregistrement sont vérifiées chronologiquement à rebours ; et/ou
dans lequel chaque référence de jeton (TR) comprend au moins la valeur de jeton (v) du jeton (T) et une partie publique (R) de la paire de clés individuelle pour le jeton en tant qu'éléments de référence de jeton, la partie publique (R) de la paire de clés individuelle pour le jeton ayant été obtenue en appliquant une fonction unidirectionnelle cryptographique à la partie privée (r) de la paire de clés individuelle pour le jeton du jeton (T) ; dans lequel la demande d'enregistrement (RA) est de préférence signée avec la partie privée (r) de la paire de clés individuelle pour le jeton afin de pouvoir vérifier une association de la référence de jeton (TR) au jeton (T).

8. Procédé selon l'une quelconque des revendications 1 à 7, dans lequel chaque référence de jeton (TR) a été obtenue par masquage du jeton (T) associé en appliquant une fonction unidirectionnelle homomorphe (f(C)) au jeton (T).

9. Procédé selon l'une quelconque des revendications précédentes, comprenant les étapes supplémentaires suivantes :

- création, par l'unité de vérification (2) du registre de référence de jeton (TRR), d'une réponse d'enregistrement, la réponse d'enregistrement indiquant un résultat de l'étape de vérification ;
- envoi de la réponse d'enregistrement à une unité de participant (TE) ou à une unité de demande d'enregistrement du système de transaction (TS) ayant envoyé la demande d'enregistrement (RA) issue de la séquence (RA$_F$) de demandes d'enregistrement (RA), l'unité de participant (TE) possédant de préférence le jeton (T) de l'au moins une référence de jeton (TR) de la séquence (RA$_F$) des demandes d'enregistrement (RA).

10. Procédé selon l'une quelconque des revendications précédentes, dans lequel

- la séquence (RA$_F$) de demandes d'enregistrement (RA) est fournie par une unité de participant (TE), et/ou
- dans lequel chaque demande d'enregistrement (RA) de la séquence (RA$_F$) comprend au moins une référence de jeton (TR) en tant que référence de jeton de sortie ainsi qu'au moins une référence de jeton d'entrée, et/ou
- dans lequel les demandes d'enregistrement (RA) de la séquence (RA$_F$) sont combinées les unes aux autres, une référence de jeton de sortie d'une demande d'enregistrement (RA) de la séquence formant respectivement en particulier une référence de jeton d'entrée de la demande d'enregistrement suivante (RA) de la séquence.

11. Registre de référence de jeton (TRR) pour un système de transaction (TS), configuré pour exécuter les étapes de procédé selon l'une quelconque des revendications précédentes, le registre de référence de jeton (TRR) comportant de préférence :

- au moins une unité de mémoire (1) pour stocker des références de jetons (TR) afin d'enregistrer des jetons (T) dans le système de transaction (TS) ;
- au moins une unité de vérification (2) pour vérifier si une référence de jeton (TR) d'une demande d'enregistrement reçue (RA) est stockée dans le registre de référence de jeton (TRR) ;
- une unité d'archivage (5) pour stocker des séquences de demandes d'enregistrement (RA) ; et
- une unité de nouvel enregistrement (4) pour enregistrer des jetons (T) nouvellement générés par un émetteur de jetons (TH) ou des jetons (T) supprimés par un émetteur de jetons (TH).

12. Registre de référence de jeton (TRR) selon la revendication 11,

dans lequel l'unité de mémoire est configurée de telle sorte que :

- une unité de participant (TE) ou une unité de demande d'enregistrement (RAE) n'a qu'un accès en écriture - notamment au moyen de demandes d'enregistrement - à l'unité de mémoire (1) ; et/ou
- l'unité d'archivage (5) et/ou l'unité de vérification (2) a un accès en écriture et en lecture à l'unité de mémoire (1) ;

et/ou

dans lequel le registre de référence de jeton (TRR) est configuré pour recevoir une pluralité de demandes d'enregistrement, qui sont vérifiées en parallèle dans une pluralité d'unités de vérification pour déterminer si l'au moins une référence de jeton (TR) contenue dans chaque demande d'enregistrement (RA) reçue peut être associée de manière unique à un jeton (T) du système de transaction (TS), toutes les demandes d'enregistrement d'une séquence de demandes d'enregistrement étant respectivement vérifiées séquentiellement les unes après les autres dans la même unité de vérification.

13. Élément de sécurité en tant qu'unité de participant (TE) pour utilisation dans un système de transaction (TS) selon la revendication 16, comprenant :

- une interface, qui est configurée pour :

o transférer des jetons (T) à une autre unité de participant (TE) ;
o transférer, à un registre de référence de jeton (TRR) ou à une unité de demande d'enregistrement du système de transaction (TS), une demande d'enregistrement (RA) comprenant au moins une première et une deuxième référence de jeton (TR) ;

- un moyen d'accès à une mémoire de jetons ou une mémoire de jetons, au moins un jeton (T) de l'élément de sécurité étant stocké dans la mémoire de jetons ; et
- une unité de calcul, configurée pour :

o appliquer une fonction unidirectionnelle cryptographique à une partie privée (r) d'une paire de clés individuelle pour le jeton (T) de la mémoire de jetons afin d'obtenir une référence de jeton (TR) ; et
o modifier des jetons (T).

14. Élément de sécurité en tant qu'unité de participant selon la revendication 13,

dans lequel une séquence ($RA_F$) de demandes d'enregistrement (RA) est stockée dans la mémoire de jetons ; et/ou
dans lequel l'unité de participant est configurée pour envoyer des demandes d'enregistrement (RA) sous forme de séquence ($RA_F$) de demandes d'enregistrement (RA) au registre de référence de jeton (TRR) ; et/ou
dans lequel l'unité de participant est configurée pour recevoir uniquement une confirmation d'enregistrement pour la séquence ($RA_F$) de demandes d'enregistrement (RA) en provenance du registre de référence de jeton (TRR).

15. Élément de sécurité en tant qu'unité de participant selon la revendication 13 ou 14,

dans lequel un seul jeton est stocké dans la mémoire de jetons ; et/ou
dans lequel, pour transférer un jeton à une autre unité de participant, le jeton ($T_a$) est divisé, une demande d'enregistrement (RA) étant générée à cet effet, la demande d'enregistrement (RA) comprenant de préférence une référence de jeton ($TR_a$) du jeton à diviser ($T_a$) et, respectivement, une référence de jeton ($TR_b$, $TR_c$) des jetons divisés ($T_b$, $T_c$) ; et/ou
dans lequel, lors de la réception d'un jeton en provenance d'une autre unité de participant, le jeton reçu ($T_e$) est combiné au jeton dans la mémoire de jetons, une demande d'enregistrement (RA) étant générée à cet effet, la demande d'enregistrement (RA) comprenant de préférence une référence de jeton ($TR_f$) du jeton combiné ($T_f$) et, respectivement, une référence de jeton ($TR_d$, $TR_e$) des jetons à combiner ($T_d$, $T_e$).

16. Système de transaction (TS) comportant :

- une couche de registre (couche TRR) ayant un registre de référence de jeton (TRR) selon les revendications 11 à 12 pour l'enregistrement de références de jeton (TR) ; et
- une couche de transaction directe (couche TE) ayant une pluralité d'unités de participant (TE), qui sont configurées pour l'échange direct de jetons (T) entre elles ;

dans lequel la couche de registre comprend de préférence une unité de demande d'enregistrement, la totalité de la séquence de demandes d'enregistrement (RA) étant envoyée par une unité de participant (TE) du système de transaction (TS) à l'unité de demande d'enregistrement du système de transaction (TS) avant l'exécution de l'étape de vérification, et le registre de référence de jeton (TRR) recevant en provenance de l'unité de demande d'enregistrement la demande d'enregistrement (RA) issue de la séquence de demandes d'enregistrement (RA).

TS

**Fig. 1**

**Fig. 2**

| Kommandotyp CO | Beschreibung | Kommando-code |
|---|---|---|
| ERZEUGEN | Erzeugen eines neuen T im TS | 0x01 |
| LÖSCHEN | Löschen eines vorhandenen T im TS | 0x02 |
| UMSCHALTEN | Ersetze in einem vorhandenen T ein r mit einem neuen r | 0x03 |
| AUFTEILEN | Teile einen vorhandenen T in zwei kleinere T | 0x04 |
| VERBINDEN | Verbinde zwei vorhandene T in einen T | 0x05 |

## Fig. 3a

| Kommandotyp CO | Signierte Registrieranfrage(n) RA |
|---|---|
| ERZEUGEN | $RA_{sig\_TH} = SIG\ (pKey_{TH}, [CREATE, TR])$ |
| LÖSCHEN | $RA_{sig\_TH} = SIG\ (pKey_{TH}, [DESTROY, TR])$ <br> $RA_{sig\_T} = SIG\ (r, [DESTROY, TR])$ |
| UMSCHALTEN | $RA_{sig\_Ta} = sig\ (r_a, [SWITCH, TR_a\ R_b])$ |
| AUFTEILEN | $RA_{sig\_Ta} = sig\ (r_a, [SPLIT, TR_a\ TR_b\ TR_c])$ |
| VERBINDEN | $RA_{sig\_Ta} = sig\ (r_a, [MERGE, TR_a\ TR_b\ TR_c])$ <br> $RA_{sig\_Tb} = sig\ (r_b, [MERGE, TR_a\ TR_b\ TR_c])$ |

## Fig. 3b

$$T = v, r$$
$$R = r \cdot G$$
$$TR = v, R$$
$$RA_{sig\_TH} = sig(pKey_{TH}, [CREATE, TR])$$

PKey$_{TH}$

T = v, r

RA$_{sig\_TH}$

Sig. ok?

TR = v, R

CREATE → (16, 0xDEADBEEF)

$$RA_{sig\_TH} = SIG(pKey_{TH}, [CREATE, TR])$$

| TS-Schicht | Eingänge | Aktionen | Ausgänge |
|---|---|---|---|
| TE-Schicht | Keine | Erzeuge r<br>Errechne R<br>Erstelle RA$_{sig\_TH}$ | Neues T |
| TRR-Schicht | RA$_{sig\_TH}$ | Validiere RA$_{sig\_TH}$ | Neues TR |

**Fig. 4**

TH                    TE1                              TRR

PKey$_{TH}$

$R=r*G$
$TR = v, R$
$RA_{sig\_TH} =$
sig (pKey$_{TH}$,
[DESTROY,
TR])
$RA_{sig\_T} =$
sig (r,
[DESTROY,
TR])

T = v, r

TR = v, R

TR = v, R

Sig. ok?

$RA_{sig\_TH}$ , $RA_{sig\_T}$

$RA_{sig\_T}$

T = v, r

TR = v, R

$$RA_{sig\_TH} = SIG\ (pKey_{TH},\ [DESTROY,\ TR])$$

$$RA_{sig\_T} = SIG\ (r,\ [DESTROY,\ TR])$$

| TS-Schicht | Eingänge | Aktionen | Ausgänge |
|---|---|---|---|
| TE-Schicht | T | Erstelle $RA_{sig\_TH}$<br>Erstelle $RA_{sig\_T}$ | Gelöschtes T |
| TRR-Schicht | TR,<br>$RA_{sig\_TH}$,<br>$RA_{sig\_T}$ | Validiere $RA_{sig\_TH}$<br>und $RA_{sig\_T}$ | Gelöschtes TR |

**Fig. 5**

$$T_a = v_a, r_a$$
$$v_b, v_c, \text{ mit: } v_a = v_b + v_c$$
$$r_b, r_c$$
$$R_b = r_b * G$$
$$R_c = r_c * G$$
$$T_b = v_b, r_b$$
$$T_c = v_c, r_c$$

$$RA_{sig\_Ta} = \text{sig} (r_a, [SPLIT, TR_a, TR_b, TR_c])$$

TE1   TE2   TRR

$$RA_{sig\_Ta}$$

$$T_b = v_b, r_b$$

$$RB_{sig}$$

$$v_a = v_b + v_c ?$$
Sig. ok?
$$TR_a = v_a, R_a$$
$$TR_b = v_b, R_b$$
$$TR_c = v_c, R_c$$
$$RB_{sig}$$

$$RA_{sig\_Ta} = \text{sig} (r_a, [SPLIT, TR_a \ TR_b \ TR_c])$$

| TS-Schicht | Eingänge | Aktionen | Ausgänge |
|---|---|---|---|
| TE-Schicht | $T_a$ | Wähle $v_b$ und $v_c$ mit $v_a = v_b + v_c$ Erzeuge $r_b, r_c$ Errechne $R_b, R_c$ Erstelle $RA_{sig\_Ta}$ | $T_b, T_c$ |
| TRR-Schicht | $TR_a$, $RA_{sig\_Ta}$ | Validiere, dass $v_a = v_b + v_c$ validiere $RA_{sig\_Ta}$ | $TR_b, TR_c$ |

**Fig. 6**

TE1    TE2    TRR

$T_d = v_d, r_d$

$T_e = v_e, r_e$

$v_f = v_d + v_e$

$r_f$

$T_f = v_f, r_f$

$R_f = r_f * G$

$RA_{sig\_Td} = sig\ (r_d,$
$[MERGE, TR_d, TR_e, TR_f])$

$RA_{sig\_Te} = sig\ (r_e,$
$[MERGE, TR_d, TR_e, TR_f])$

$RA_{sig\_Td}$
$RA_{sig\_Te}$

$T_f = v_f, r_f$

$RB_{sig\_TRR}$

$v_f = v_d + v_e$?

Sig. ok?

$TR_d = v_d, R_d$

$TR_e = v_e, R_e$

$TR_f = v_f, R_f$

$$RA_{sig\_Td} = sig\ (r_d, [MERGE, TR_d\ TR_e\ TR_f])$$

$$RA_{sig\_Te} = sig\ (r_e, [MERGE, TR_d\ TR_e\ TR_f])$$

| TS-Schicht | Eingänge | Aktionen | Ausgänge |
|---|---|---|---|
| TE-Schicht | $T_d$, $T_e$ | Errechne $v_f = v_d + v_e$<br>Erzeuge $r_f$<br>Errechne $R_f$<br>Erstelle $RA_{sig\_Td}$<br>$RA_{sig\_Te}$ | $T_f$ |
| TRR-Schicht | $TR_d$, $TR_e$<br>$RA_{sig\_Td}$<br>$RA_{sig\_Te}$ | Validiere, dass<br>$v_f = v_d + v_e$<br>validiere $RA_{sig\_Td}$<br>$RA_{sig\_Te}$ | $TR_f$ |

**Fig. 7**

TE1          TE2          TRR

$T_g = v_g, r_g$

$v_g = v_h$

$r_h$

$T_h = v_h, r_h$

$R_h = r_h * G$

$RA_{sig\_Tg} = sig\ (r_g,$
$[SWITCH, TR_g, R_h])$

$T_g = v_g, r_g$

$RA_{sig\_Tg}$

$RB_{sig\_TRR}$

$v_g = v_h$ ?

Sig. ok?

$TR_g = v_g, R_g$

$TR_h = v_h, R_h$

$$RA_{sig\_Tg} = sig\ (r_g, [SWITCH, TR_g\ R_h])\ oder$$
$$RA_{sig\_Tg} = sig\ (r_g, [SWITCH, TR_g\ TR_h])$$

| TS-Schicht | Eingänge | Aktionen | Ausgänge |
|---|---|---|---|
| TE-Schicht | $T_g$ | Erzeuge $r_h$<br>Errechne $R_h$<br>Erstelle $RA_{sig\_Th}$ | $T_h$ |
| TRR-Schicht | $TR_g$<br>$RA_{sig\_Tg}$ | Validiere, dass<br>$v_g = v_h$<br>validiere $RA_{sig\_Tg}$ | $TR_h$ |

**Fig. 8**

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009038645 A1
- DE 102009034436 A1
- WO 2016200885 A1
- WO 2020212337 A1
- DE 102019002732 A1